# EUROPÄISCHE PATENTSCHRIFT

(11) **EP 3 972 037 B1**
(45) Veröffentlichungstag und Bekanntmachung des Hinweises auf die Patenterteilung: **13.05.2026**
(21) Anmeldenummer: 20197610.7
(22) Anmeldetag: 22.09.2020
(51) Int. Cl.: H01M 50/107, H01M 50/152, H01M 50/213, H01M 50/548, H01M 50/559, H01M 10/0525, H01M 10/0587, H01M 10/653, H01M 10/6563, H01M 10/6566, H01M 10/6568, H01M 50/562

(54) **ENERGIESPEICHERZELLE**
ENERGY STORAGE CELL
CELLULE D'ACCUMULATION D'ÉNERGIE

(43) Veröffentlichungstag der Anmeldung: 23.03.2022
(73) Patentinhaber: VARTA Microbattery GmbH, 73479 Ellwangen Jagst (DE)
(72) Erfinder: Ensling, David, 73479 Ellwangen (DE); Pytlik, Edward, 73479 Ellwangen (DE)
(74) Vertreter: Ostertag & Partner Patentanwälte mbB

(56) Entgegenhaltungen:
- EP-A1- 3 276 701
- DE-A1- 102006 047 926
- DE-A1- 102008 042 587
- DE-A1- 102011 010 664
- DE-A1- 102011 105 040
- DE-A1- 102017 108 722
- DE-B3- 102019 001 520

## Beschreibung

Die vorliegende Erfindung betrifft eine Energiespeicherzelle mit einem Elektroden-Separator-Verbund in Form eines hohlzylindrischen Wickels, eine Batterie mit mehreren solcher Energiespeicherzellen sowie ein Verfahren zur Herstellung solcher Energiespeicherzellen.

### ANWENDUNGSGEBIET UND STAND DER TECHNIK

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden Ionenstrom innerhalb der Zelle. Dieser Ionenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, insbesondere graphitischer Kohlenstoff, eingesetzt. Es können auch andere, nicht-graphitische Kohlenstoffmaterialien verwendet werden, die zur Interkalation von Lithium befähigt sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essenziell sein kann. Auch diese Parameter sind für zylindrische Rundzellen, die einen Verbundkörper in Form eines Wickels enthalten, sehr wichtig. Beim Laden und beim Entladen von Zellen können aufgrund von Leistungsverlusten Wärmestaus in den Zellen auftreten, die zu massiven thermomechanischen und elektrochemischen Belastungen und in der Folge zu Verformungen und Beschädigungen der Zellstruktur und Zellchemie führen können. Das Risiko besteht verstärkt dann, wenn die elektrische Anbindung der Stromkollektoren über separate elektrische, an die Stromkollektoren geschweisste Ableiterfahnen erfolgt, die axial aus gewickelten Verbundkörpern austreten, da bei starken Belastungen beim Laden oder Entladen eine Erwärmung lokal an diesen Ableiterfahnen und in angrenzenden Elektrodenbereichen auftreten kann. Eine Entwärmung des Elektrodenverbundes kann nur sehr schlecht über diese thermischen Engstellen erfolgen. Gerade der Im Kern des Elektrodenverbunds/-wickels kann ein Hitzestau entstehen. So ist für viele Anwendungen das thermische Verhalten der Zelle entscheidend - neben der Höhe der thermischen Verluste spielt vor allem auch die Fähigkeit zur Wärmeabgabe eine entscheidende Rolle.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden. Auch unterscheiden sich die Wärmeleitfähigkeiten in axialer und in radialer Richtung mitunter deutlich. Über stirnseitig kontaktierte Ableiterplatten wird die Wärmeleitung in axialer Richtung bereits deutlich verbessert. Damit ist eine effektivere Einkopplung der Kühlleistung über die Pole möglich. Dennoch bleibt es schwierig die Wärme aus dem Zellkern abzuführen, insbesondere bei größeren Zellen steigt die Wärmekapazität. Die Effizienz der Einkopplung von Kühlleistung ist daher sehr wichtig.

Bei tiefen Temperaturen ist auch die Möglichkeit der Temperierung/Erwärmung von Zellen wichtig, um beispielsweise ein Laden der Zelle bei Minusgraden zu ermöglichen. Natürlich gelten hierbei analoge Betrachtungen.

Um Beschädigungen von Energiespeicherzellen in Folge der erwähnten thermomechanischen Belastungen zu verhindern oder zumindest zu minimieren, sollte ein definierter Betriebstemperaturbereich eingehalten werden, der einen sicheren und schonenden Betrieb der Energiespeicherzellen gewährleistet. Daher sind Maßnahmen zur Temperierung von Energiespeicherzellen in der Regel sinnvoll.

Es ist bekannt, Kühlmittelkreisläufe einzusetzen, um Energiespeicherzellen einer Batterie oder eines Batteriemoduls zu kühlen. Beispielsweise können Kühl- oder Kälteplatten verwendet werden, auf die die Batteriemodule mit ihrer Unterseite zur Wärmeabfuhr gepresst werden.

Andere Ansätze arbeiten mit flüssigen Kühlmedien. Aus der DE 10 2007 024 869 A1 ist beispielsweise ein Batteriemodul für Elektrogeräte bekannt, wobei ein Kühlmedium durch das Gehäuse des Moduls geleitet wird.

Die DE 10 2014 112 628 A1 beschreibt ein kühlbares Batteriemodul, wobei das Batteriemodul zwei in Abstand zueinander angeordnete Halteplatten sowie eine Mehrzahl elektrischer Rundzellen aufweist, die endseitig Durchlässe in den Halteplatten abgedichtet durchsetzen. Zwischen den Halteplatten ist ein von den elektrischen Zellen durchsetzter Raum gebildet, der zur Aufnahme eines elektrisch leitenden, die elektrischen Zellen umströmenden Kühlmittels gebildet ist. Die sich endseitig der elektrischen Zellen befindlichen Zellpole sind außerhalb dieses Raumes angeordnet. Bei dem Kühlmittel handelt es sich vorzugsweise um ein Kühlmittel auf Ethylen-Glykol-Basis.

Weiterhin ist eine Luftkühlung von Batteriemodulen bekannt. So beschreibt die WO 2013/023847 A1 ein Batteriemodul insbesondere für Kraftfahrzeuge mit einem Batteriezellenstapel aus vorzugsweise prismatischen Batteriezellen, wobei sich zwischen den Batteriezellen Luftkanäle befinden. Hierdurch soll eine ausreichende Kühlung der Batteriezellen mittels eines Luftstroms ermöglicht werden.

Die DE 10 2014 201 165 A1 schlägt ein Batteriemodul vor, welches eine Anzahl von elektrisch miteinander verschalteten Batteriezellen umfasst. Die einzelnen Batteriezellen werden durch eine Luftströmung temperiert, die Kanäle durchströmt, die sich im Wesentlichen entlang der Batteriezellen erstrecken. Die Batteriezellen sind in einzelnen Batteriezellenfächern eines Batteriezellenhalters untergebracht. In den Seitenwänden der Batteriezellenfächer befinden sich die Kanäle, die von der Kühlluft durchströmt werden. Für eine ausreichende Kühlwirkung muss das Material des Batteriezellenhalters gute Wärmeleiteigenschaften aufweisen.

Aus der DE 102011105040 A1 ist eine Lithiumsekundärzelle in zylinderischer Bauform bekannt, welche einen Wickeldorn und ein Wickelpaket aufweist, wobei letzteres folienartige beschichtete Streifen sowie Kontaktierungsstreifen umfasst, die die elektrische Zellenstruktur aus Anode, Kathode und Separator bilden. Mehrere radial angeordnete, kraftschlüssige Verbindungsmittel, welche jeweils zwischen der äußeren und der inneren Polkappe wirken, fixieren das Wickelpaket und realisieren eine elektrische Kontaktierung zwischen den Kontaktierungsstreifen und der äußeren Polkappe.

Aus der EP 3276701 A1 ist eine elektrochemische Zelle bekannt, die einen ringförmigen Elektrodenverbundkörper und ein ringförmiges, flüssigkeitsdichtes Gehäuse mit einem ringförmigen Innenraum, das um eine zentrale Durchbrechung oder Ausnehmung herum angeordnet ist, umfasst. Der ringförmige Elektrodenverbundkörper ist hierbei in dem ringförmigen Innenraum angeordnet.

Die DE 102017108722 A1 betrifft eine zylindrische Rundzelle mit einer Kühlvorrichtung, die sich zumindest teilweise durch die Batteriezelle erstreckt. Bei dieser Kühlvorrichtung kann es sich beispielsweise um einen massiven Stab, ein hohles Rohr oder anderes handeln. Konstruktive Details der Zelle selbst sind nicht beschrieben.

Aus der DE 102011010664A1 ist eine Energiespeicherzelle bekannt, die eine Ausnehmung, insbesondere durchgehende Ausnehmung, aufweist, die als Durchströmungskanal zur Kühlung des Energiespeichers fungiert. Die Ausnehmung kann als metallisches Hohlteil oder als Kunststoffhohlteil ausgeführt sein.

Aus der DE 102008042587 A1 sind ein Kühlsystem mit einer Energiespeichereinheit und einem Kühlaggregat bekannt. Das Kühlaggregat wird von der Energiespeichereinheit mit Energie versorgt und erzeugt Kälte, wobei ein Teil der von dem Kühlaggregat erzeugten Kälte zur Kühlung der Energiespeichereinheit verwendet werden kann. Außerdem wird eine dazu angepasste Energiespeichereinheit mit einem integrierten Kühlmittelpfad beschrieben.

Aus der DE 102019001520 B3 ist eine Röhrenzelle bekannt, die einen Stapel aus einer Vielzahl von Elektroden umfasst. Der Stapel weist ein axiales Loch auf, durch das ein Kühlmittel strömen kann.

Aus der DE 102006047926 A1 ist eine Batteriezelle bekannt, die einen Hohlraum aufweist, der von einem äußeren Zellmantel und einem inneren Zellmantel begrenzt ist. Auf der dem Hohlraum abgewandten Seite des inneren Zellmantels ist ein Kanal vorgesehen. Der Kanal ist wenigstens bereichsweise von einem Fluid durchstrombar und es ist wenigstens im Bereich des Kanals über den inneren Zellmantel Wärme aus dem Hohlraum an das Fluid abgebbar.

Bekannte Kühlkonzepte aus dem Stand der Technik liefern dennoch oftmals unbefriedigende Ergebnisse. Vor allem kann es zu ungleichmäßigen Kühleffekten in unterschiedlichen Bereichen der Batterie oder des Batteriemoduls kommen, so dass einzelne Energiespeicherzellen unterschiedlich stark gekühlt werden. Bei schlecht gekühlten Zellen kann sich dies negativ auf das Zyklenverhalten der Zellen und damit auf deren Lebensdauer auswirken.

Weiterhin tritt bei bekannten Kühlkonzepten das Problem auf, dass die Kühlung zwar Außenbereiche von Energiespeicherzellen erfasst, nicht jedoch innere Bereich. Gerade dort können jedoch Wärmestaus auftreten. Dieses Problem kommt insbesondere bei größeren zylindrischen Energiespeicherzellen zum Tragen, wobei hierunter vor allem zylindrische Zellen zu verstehen sind, die einen Durchmesser von 30 mm oder mehr, aufweisen.

### AUFGABE UND LÖSUNG

Die Erfindung stellt sich demgegenüber die Aufgabe, Energiespeicherzellen bereitzustellen, die dazu ausgebildet sind, auch in inneren Bereichen einer Kühlung zugänglich zu sein. Gleichzeitig sollen sich die Energiespeicherzellen aber auch durch eine sehr gute Energiedichte sowie eine homogene Stromverteilung möglichst über die gesamte Fläche und Länge ihrer Elektroden auszeichnen. Zudem sollen die Energiespeicherzellen gute Eigenschaften bezüglich ihres Innenwiderstands und ihrer passiven Entwärmungsfähigkeit besitzen.

Diese Aufgabe wird durch die zylindrische Energiespeicherzelle mit den Merkmalen des Anspruchs 1 gelöst. Weiterhin wird die Aufgabe durch eine Batterie und durch ein Verfahren zur Herstellung der Energiespeicherzellen gemäß den weiteren nebengeordneten Ansprüchen gelöst. Vorteilhafte Ausgestaltungen der Energiespeicherzelle und der weiteren Aspekte der Erfindung ergeben sich aus den abhängigen Ansprüchen.

Die erfindungsgemäße zylindrische Energiespeicherzelle zeichnet sich stets durch die unmittelbar folgenden Merkmale a. bis l. aus:
a. Die Energiespeicherzelle umfasst einen Elektroden-Separator-Verbund mit der Sequenz Anode / Separator / Kathode.
b. Der Elektroden-Separator-Verbund liegt in Form eines hohlzylindrischen Wickels mit zwei endständigen Stirnseiten und einem dazwischen liegenden Wickelmantel vor.
c. Die Energiespeicherzelle umfasst ein Gehäuse.
d. Das Gehäuse umschließt einen hohlzylindrischen Innenraum.
e. In dem hohlzylindrischen Innenraum ist der als Wickel ausgebildete Elektroden-Separator-Verbund axial ausgerichtet.
f. Zur Begrenzung des Innenraums umfasst das Gehäuse
   - ein erstes ringförmiges Verschlusselement mit einem Außen- und einem Innendurchmesser,
   - ein zweites ringförmiges Verschlusselement mit einem Außen- und einem Innendurchmesser,
   - ein erstes rohrförmiges Gehäuseteil mit zwei endständigen kreisförmigen Öffnungen, wobei der Durchmesser des ersten rohrförmigen Gehäuseteils auf den Außendurchmesser des ersten ringförmigen Verschlusselements und des zweiten ringförmigen Verschlusselements abgestimmt ist, und
   - ein zweites rohrförmiges Gehäuseteil mit zwei endständigen kreisförmigen Öffnungen, wobei der Durchmesser des zweiten rohrförmigen Gehäuseteils auf den Innendurchmesser des ersten ringförmigen Verschlusselements und des zweiten ringförmigen Verschlusselements abgestimmt ist.
g. Die Anode des Elektroden-Separator-Verbundes ist bandförmig ausgebildet und umfasst einen bandförmigen Anodenstromkollektor mit einem ersten Längsrand und einem zweiten Längsrand.
h. Der Anodenstromkollektor umfasst einen streifenförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist.
i. Die Kathode des Elektroden-Separator-Verbundes ist bandförmig ausgebildet und umfasst einen bandförmigen Kathodenstromkollektor mit einem ersten Längsrand und einem zweiten Längsrand.
j. Der Kathodenstromkollektor umfasst einen streifenförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist.
k. Die Anode und die Kathode sind derart ausgebildet und/oder innerhalb des Elektroden-Separator-Verbunds derart zueinander angeordnet, dass der erste Längsrand des Anodenstromkollektors aus einer der endständigen Stirnseiten und der erste Längsrand des Kathodenstromkollektors aus der anderen der endständigen Stirnseiten austritt.
l. Die Energiespeicherzelle umfasst ein zumindest teilweise metallisch ausgebildetes Kontaktelement, vorzugsweise ein vollständig aus Metall ausgebildetes oder ausschließlich aus metallischen Komponenten bestehendes Kontaktelement, das in unmittelbarem Kontakt mit einem der ersten Längsränder steht und das mit diesem Längsrand durch Verschweißung verbunden ist.

Die beanspruchte Energiespeicherzelle ist eine zylindrische Rundzelle mit einem Außendurchmesser von mindestens 30 mm.

### Bevorzugte Ausführungsformen des elektrochemischen Systems

Grundsätzlich umfasst die Erfindung Energiespeicherzellen unabhängig von ihrer elektrochemischen Ausgestaltung. In besonders bevorzugten Ausführungsformen ist die erfindungsgemäße Energiespeicherzelle jedoch eine Lithium-Ionen-Zelle, insbesondere eine sekundäre Lithium-Ionen-Zelle. Für Anode und Kathode der Energiespeicherzelle können daher im Grunde sämtliche für sekundäre Lithium-Ionen-Zellen bekannten Elektrodenmaterialien verwendet werden.

In der negativen Elektrode einer als Lithium-Ionen-Zelle ausgebildeten erfindungsgemäßen Energiespeicherzelle können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich können auch Lithiumtitanat (Li₄Ti₅O₁₂) oder ein Derivat desselben oder Nioboxid oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Auch dünne Anoden aus metallischem Lithium können eingesetzt werden.

Für die positive Elektrode einer als Lithium-Ionen-Zelle ausgebildeten erfindungsgemäßen Energiespeicherzelle kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer als Lithium-Ionen-Zelle ausgebildeten erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

### Bevorzugte Ausführungsformen des Separators

Der Elektroden-Separator-Verbund umfasst bevorzugt mindestens einen bandförmigen Separator, besonders bevorzugt zwei bandförmige Separatoren, der oder die jeweils einen ersten und einen zweiten Längsrand aufweisen.

Bevorzugt werden die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen Ausführungsformen kann es sich bei dem Separator oder den Separatoren des Verbundes auch um eine oder mehrere Schichten aus einem Festelektrolyten handeln.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Es ist bevorzugt, dass die Längsränder des oder der Separatoren die Stirnseiten des als Wickel ausgebildeten Elektroden-Separator-Verbunds bilden.

Es ist weiterhin bevorzugt, dass die aus den endständigen Stirnseiten des Wickels austretenden Längsränder des Anodenstromkollektors und/oder des Kathodenstromkollektors nicht mehr als 5000 µm, bevorzugt nicht mehr als 3500 µm, aus den Stirnseiten, insbesondere aus den von den Längsrändern des oder der Separatoren gebildeten Stirnseiten, herausragen.

Besonders bevorzugt ragt der Längsrand des Anodenstromkollektors aus der Stirnseite des Wickels nicht mehr als 2500 µm, besonders bevorzugt nicht mehr als 1500 µm, heraus. Besonders bevorzugt ragt der Längsrand des Kathodenstromkollektors aus der Stirnseite des Wickels nicht mehr als 3500 µm, besonders bevorzugt nicht mehr als 2500 µm, heraus.

Bevorzugt sind die bandförmige Anode und die bandförmige Kathode innerhalb des Elektroden-Separator-Verbunds versetzt zueinander angeordnet, um zu gewährleisten, dass der erste Längsrand des Anodenstromkollektors aus einer der endständigen Stirnseiten und der erste Längsrand des Kathodenstromkollektors aus der anderen der endständigen Stirnseiten austritt.

### Bevorzugte Ausführungsformen der Stromkollektoren

Die Stromkollektoren der Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

In einigen besonders bevorzugten Ausgestaltungen kann die erfindungsgemäße Energiespeicherzelle durch mindestens eines der unmittelbar folgenden Merkmale a. bis c. gekennzeichnet sein:
a. Der streifenförmige Hauptbereich des mit dem Kontaktelement durch Verschweißung verbundenen Stromkollektors weist eine Vielzahl von Durchbrechungen auf.
b. Bei den Durchbrechungen in dem Hauptbereich handelt es sich um runde oder eckige Löcher, insbesondere Stanz- oder Bohrlöcher.
c. Der mit dem Kontaktelement durch Verschweißung verbundene Stromkollektor ist in dem Hauptbereich perforiert, insbesondere durch Rundloch- oder Schlitzlochperforation.

Bevorzugt sind die unmittelbar vorstehenden Merkmale a. und b. oder a. und c., besonders bevorzugt die drei unmittelbar vorstehenden Merkmale a. bis c., in Kombination miteinander realisiert.

Die Vielzahl von Durchbrechungen resultiert in einem verringerten Volumen und auch in einem verringerten Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den streifenförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann sein, bei der Einbringung der Durchbrechungen darauf zu achten, dass der maximale Durchmesser der Durchbrechungen nicht zu groß ist. Bevorzugt sollten die Dimensionen der Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Energiespeicherzelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit dem Kontaktelement durch Verschweißung verbundene Stromkollektor weist zumindest in einem Teilabschnitt des Hauptbereichs ein geringeres Flächengewicht auf als der freie Randstreifen desselben Stromkollektors.
b. Der mit dem Kontaktelement durch Verschweißung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Die freien Randstreifen von Anoden- und Kathodenstromkollektor begrenzen den Hauptbereich zu den ersten Längsrändern hin. Bevorzugt umfassen sowohl der Anoden- als auch der Kathodenstromkollektor freie Randstreifen jeweils entlang ihren beiden Längsrändern.

Die Durchbrechungen charakterisieren den Hauptbereich. Mit anderen Worten, die Grenze zwischen dem Hauptbereich und dem oder den freien Randstreifen entspricht einem Übergang zwischen Bereichen mit und ohne Durchbrechungen.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektor weist in dem Hauptbereich eine Zugfestigkeit von 20 N/mm2 bis 250 N/mm2 auf.

Es ist besonders bevorzugt, dass die unmittelbar vorstehenden Merkmale a. bis c. in Kombination miteinander verwirklicht sind.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oder ähnlich ausgebildet sind. Die jeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der streifenförmige Hauptbereich des Anodenstromkollektors und der Hauptbereich des Kathodenstromkollektors sind beide durch eine Vielzahl der Durchbrechungen gekennzeichnet.
b. Die Energiespeicherzelle umfasst das Kontaktelement, das mit dem einem der ersten Längsränder durch Verschweißung verbunden ist, als erstes Kontaktelement, sowie weiterhin ein zweites zumindest teilweise, vorzugsweise vollständig metallisch ausgebildetes Kontaktelement, das mit dem anderen der ersten Längsränder durch Verschweißung verbunden ist.

Es ist besonders bevorzugt, dass die unmittelbar vorstehenden Merkmale a. und b. in Kombination miteinander verwirklicht sind.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

### Erfindungsgemäße Lösung

Besonders zeichnet sich die Zelle durch die beiden folgenden Merkmale m. und n. aus:
m. Das erste und/oder das zweite ringförmige Verschlusselement des Gehäuses fungiert als das Kontaktelement, und
n. das zweite rohrförmige Gehäuseteil definiert einen beidseitig offenen Kanal, der axial durch die Energiespeicherzelle verläuft.

Der durchgängige, axiale Kanal verläuft vorzugsweise durch das Zentrum der Energiespeicherzelle, insbesondere derart, dass die Achse des hohlzylindrischen Wickels in dem axialen Kanal liegt.

In einer bevorzugten Ausführungsform weist das Gehäuse der Energiespeicherzelle eine zylindrische Form auf, wobei der Kanal einen axial durch das Gehäuse verlaufenden Durchgang bildet. In einer

Weiterbildung ist das Gehäuse der erfindungsgemäßen Energiespeicherzelle hohlzylindrisch ausgebildet. Dies ist dann der Fall, wenn der Kanal bzw. Das zweite rohrförmige Gehäuseteil einen kreisförmigen oder zumindest einen ovalen Querschnitt aufweist.

Wenn das zweite rohrförmige Gehäuseteil keinen kreisförmigen Querschnitt aufweist, so bezieht sich der Terminus "Innendurchmesser" auf seinen maximalen Durchmesser.

Es ist bevorzugt, dass das erste rohrförmige Gehäuseteil einen größeren Durchmesser als das zweite rohrförmige Gehäuseteil hat und einen äußeren Gehäusemantel des zylindrischen oder hohlzylindrischen Gehäuses der Energiespeicherzelle bildet, während das zweite rohrförmige Gehäuseteil einen inneren Gehäusemantel es zylindrischen oder hohlzylindrischen Gehäuses bildet. Die ringförmigen Verschlusselemente bilden dabei endständige Deckel des Gehäuses der Energiespeicherzelle. Bevorzugt ist der Durchmesser des ersten rohrförmigen Gehäuseteils derart auf die Außendurchmesser des ersten ringförmigen Verschlusselements und des zweiten ringförmigen Verschlusselements abgestimmt, dass eine dichtende Verbindung zwischen den endständigen Öffnungen des ersten rohrförmigen Gehäuseteils und dem äußeren Rand der Verschlusselemente ermöglicht wird. Beispielsweise kann einer der äußeren Ränder durch Verschweißung oder Verlötung in einer der Öffnungen fixiert sein. Auf den anderen der äußeren Ränder kann beispielsweise eine elektrisch isolierende Dichtung aufgezogen sein, wobei dieses Deckelteil durch mechanische in der anderen der Öffnungen fixiert wird.

Entsprechendes gilt für die Abstimmung des Durchmessers des zweiten rohrförmigen Gehäuseteils mit dem Innendurchmesser des ersten und des zweiten ringförmigen Verschlusselements.

Besonders bevorzugt zeichnet sich die erfindungsgemäße Energiespeicherzelle durch die unmittelbar folgenden zusätzlichen Merkmale a. und b. aus:
a. Die Energiespeicherzelle umfasst zwei zumindest teilweise metallisch ausgebildete Kontaktelemente, vorzugsweise zwei vollständig metallisch ausgebildete Kontaktelemente, von denen jedes in unmittelbarem Kontakt mit einem der ersten Längsränder steht und die mit diesen Längsrändern durch Verschweißung verbunden sind.
b. Das erste und das zweite ringförmige Verschlusselement fungieren als die zwei Kontaktelemente.

In dieser Ausführungsform sind also die beiden ersten Längsränder jeweils unmittelbar an eines der als Kontaktelement fungierende Verschlusselemente angebunden, durch Verschweißung.

In besonders bevorzugter Weise zeichnet sich die erfindungsgemäße Energiespeicherzelle durch das unmittelbar folgende zusätzliche Merkmal a. aus:
a. Der beidseitig offene Kanal, der axial durch die Energiespeicherzelle verläuft, ist zur Temperierung der Energiespeicherzelle eingerichtet.

Das Kontaktelement dient nicht nur zum elektrischen Kontaktieren einer oder beider Elektroden, vielmehr fungiert es gleichzeitig als Gehäuseteil. Damit geht ein großer Vorteil einher, denn ein separater elektrischer Leiter zwischen dem Kontaktelement und einem Gehäuseteil ist anders als bei herkömmlichen Energiespeicherzellen nicht erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser Zelle sehr gute Entwärmungseigenschaften.

Gleichzeitig ermöglicht der beidseitig offene Kanal eine Temperierung der Energiespeicherzelle von innen, die insbesondere bei verhältnismäßig großformatigen Zellen ein optimales Temperaturmanagement erlaubt und damit eine maximale Leistungsfähigkeit und eine maximale Lebensdauer der Energiespeicherzelle bewirkt.

Die erfindungsgemäße Energiespeicherzelle vereint somit die Vorteile eines Zelldesigns, bei dem eine Anbindung der Stromkollektoren über Kontaktelemente, die Bestandteil des Zellgehäuses sind, realisiert ist, mit den Vorteilen der Realisierbarkeit eines besonders effektiven Kühlkonzeptes für die Energiespeicherzelle. Dies ermöglicht es, erfindungsgemäße Energiespeicherzellen größer als herkömmliche Energiespeicherzellen auszulegen. Die Wärmeableitung über die Gehäuseflächen bzw. Kontaktelemente wird sowohl in axialer Richtung durch eine möglichst homogene Anbindung der Stirnseiten der Elektroden verbessert, als auch in radialer Richtung über die zusätzliche, innenliegende Oberfläche des Hohlzylinders.

Mit dem Ausdruck Kühlkonzept ist vorliegend nicht zwingend ausschließlich eine Kühlung, sondern allgemein eine Temperierung gemeint. Wie eingangs beschrieben, ist für einen optimalen Betrieb einer Batterie oder eines Batteriemoduls, das zwei oder mehr Energiespeicherzellen umfasst, in der Regel ein Temperaturmanagement vorteilhaft. Hierbei spielt eine Kühlung der sich im Betrieb erwärmenden Energiespeicherzellen eine große Rolle. Aber auch eine Erwärmung kann gegebenenfalls sinnvoll und erforderlich sein, um beispielsweise für einen Lade- oder Entladeprozess eine erforderliche Mindesttemperatur der Energiespeicherzellen zu gewährleisten. In besonders vorteilhafter Weise kann für den Betrieb der erfindungsgemäßen Energiespeicherzellen ein an sich bekanntes Temperaturmanagementsystem eingesetzt werden, bei dem insbesondere auch eine Temperatursensorik eingesetzt werden kann.

In einer ersten prinzipiellen Ausgestaltung kann sich die Energiespeicherzelle im Hinblick auf die Realisierung eines Kühlkonzeptes insbesondere durch das folgende zusätzliche Merkmal a. auszeichnen:
a. Der beidseitig offene Kanal ist für den Durchfluss eines Temperiermediums, insbesondere eines Gases oder einer Flüssigkeit, ausgebildet.

Prinzipiell eignen sich verschiedene Arten von Temperiermedien für den Betrieb der erfindungsgemäßen Energiespeicherzelle. In besonders vorteilhafter Weise werden fließfähige Temperiermedien eingesetzt, insbesondere Gase oder Flüssigkeiten. Selbstverständlich kann das jeweilige Temperiermedium auch zur Kühlung oder gegebenenfalls zur Erwärmung der äußeren Zellmäntel der Energiespeicherzellen genutzt werden.

Besonders geeignet ist beispielsweise die Verwendung von Luft als Temperiermedium, wobei die temperierte Luft zur Kühlung oder gegebenenfalls auch zum Erwärmen in einfacher Weise durch die erfindungsgemäße Energiespeicherzelle hindurchgeleitet werden kann. Zur Kühlung kann beispielsweise Umgebungsluft verwendet werden, die mittels eines Ventilators oder einer anderen Blas- oder Saugeinrichtung durch den beidseitig offenen Kanal der Energiespeicherzelle geleitet wird.

In anderen Ausgestaltungen kann ein flüssiges Temperiermedium verwendet werden, beispielsweise Wasser oder eine andere Kühlflüssigkeit, wie beispielsweise ein Kühlmittel auf der Basis von Ethylenglykol. In diesem Fall können entsprechende Pumpvorrichtungen vorgesehen sein, mit deren Hilfe die jeweilige Flüssigkeit durch den beidseitig offenen Kanal der Energiespeicherzellen geleitet wird. Das flüssige Temperiermiedium kann vorzugsweise in einem Kreislaufsystem geführt werden.

Gemäß einer zweiten prinzipiellen Ausgestaltung im Hinblick auf das Kühlkonzept bzw. das Temperierkonzept bei den erfindungsgemäßen Energiespeicherzellen zeichnet sich die Energiespeicherzelle insbesondere durch das folgende zusätzliche Merkmal aus:
a. In den beidseitig offenen Kanal ist ein metallisches Stäbchen oder Röhrchen als Temperiervermittler eingebracht.

Gemäß dieser Ausgestaltung der Erfindung wird das metallische Stäbchen oder Röhrchen, das sich innerhalb des beidseitig offenen Kanals und damit also im Zentrum der erfindungsgemäßen Energiespeicherzelle befindet, im Sinne einer sogenannten *Heatpipe* (Wärmeröhrchen) genutzt. Die *Heatpipe* zeichnet sich durch besonders gute Temperaturübertragungseigenschaften aus und kann damit schnell auf eine erhöhte oder erniedrigte Temperatur gebracht werden.

In besonders bevorzugter Weise wird als *Heatpipe* ein metallisches Röhrchen als Wärmeröhrchen im eigentlichen Sinne verwendet, das mittels eines entsprechenden Temperiermediums den Temperatureintrag bewirkt, wobei das Temperiermedium in und gegebenenfalls durch das Wärmeröhrchen geleitet wird. In diesem Fall erfolgt eine aktive Kühlung der Zelle mittels des Röhrchens.

In anderen Ausgestaltungen kann auch ein massives metallisches Stäbchen verwendet werden, das durch gute Temperaturleitungseigenschaften eine sehr schnelle Temperaturübertragung in das Innere der erfindungsgemäßen Energiespeicherzelle erlaubt. Das Stäbchen kann außerhalb des Kanals temperiert werden. Hierzu kann das Stäbchen mit entsprechenden Kühl- und/oder Heizmitteln, die Bestandteil eines Batteriemoduls sein können, gekoppelt sein.

Als Temperiervermittler kann beispielsweise ein massives Kupferstäbchen oder ein Kupferröhrchen eingesetzt werden, das in den beidseitig offenen Kanal eingebracht und an geeignete Kühl- und/oder Heizelemente angeschlossen wird.

### Bevorzugte Ausgestaltungen der ringförmigen Verschluss- bzw. Kontaktelemente

Erfindungsgemäß dienen das erste und/oder das zweite ringförmige Verschlusselement auch als Kontaktelement. Oder mit anderen Worten, das Kontaktelement ist Teil des Gehäuses der erfindungsgemäßen Zelle.

Das erste und/oder das zweite ringförmige Verschlusselement weisen bevorzugt jeweils einen inneren Rand, der den Innenumfang definiert, und einen äußeren Rand, der den Außenumfang definiert, auf. In bevorzugten Ausführungsformen sind beide Ränder kreisförmig.

Im einfachsten Fall können das erste und/oder das zweite ringförmige Verschlusselement von einer metallischen Lochscheibe mit einer zentralen Durchbrechung, insbesondere einem zentralen, kreisförmigen Loch, gebildet werden oder eine solche umfassen. Der oder die Längsränder der Elektrodenstromkollektoren sind vorzugsweise mit diesen metallischen Lochscheiben durch Verschweißung oder Verlötung verbunden.

In der einfachsten Ausführungsformen handelt es sich bei der Lochscheibe um ein Metallteil mit kreisförmigem Umfang, das sich nur in einer Ebene erstreckt. In vielen Fällen können aber auch aufwendigere Gestaltungen bevorzugt sein. So kann die Lochscheibe profiliert sein, also beispielsweise um ihr Zentrum eine oder mehrere Vertiefungen und/oder Erhöhungen, beispielsweise kreisförmige Vertiefungen und/oder Erhöhungen in konzentrischer Anordnung oder lineare Vertiefungen und/oder Erhöhungen aufweisen. Weiterhin kann die Lochscheibe einen Rand aufweisen, der radial nach innen umgebogen ist, so dass sie einen doppellagigen Randbereich mit beispielsweise U-förmigem Querschnitt aufweist.

Die Kontaktelemente bzw. die ringförmigen Verschlusselemente können aus mehreren Einzelteilen, darunter die Lochscheibe, bestehen, die nicht zwingend alle aus Metall bestehen müssen. In einer besonders bevorzugten Ausführungsform kann das Kontaktelement beispielsweise einen metallischen Poldeckel mit kreisförmigem Umfang umfassen, der näherungsweise oder exakt den gleichen Durchmesser wie die Lochscheibe aufweist, so dass der Rand der Lochscheibe und der Rand des Poldeckels gemeinsam den Rand des Kontaktelements bzw. des ringförmigen Verschlusselements bilden. In einer weiteren Ausführungsform kann der Rand des Poldeckels durch einen radial nach innen umgebogenen Rand der Metallscheibe umschlossen werden. In bevorzugten Ausführungsformen kann eine Klemmverbindung zwischen den beiden Einzelteilen bestehen. Beide Teile können aber auch durch Verschweißung miteinander verbunden sein.

Die Metallscheibe und der Poldeckel schließen bevorzugt einen Zwischenraum ein. Hierzu weist der Poldeckel bevorzugt eine zentrale Wölbung auf. Der Zwischenraum ist bei erfindungsgemäßen Zellen bevorzugt nicht gegenüber der Umgebung der Zelle abgeschlossen. In der Regel umfasst der Poldeckel mindestens eine Durchbrechung, insbesondere eine zentrale Durchbrechung, durch welche ein Temperiermedium in den Zwischenraum ein- oder aus dem Zwischenraum austreten kann, so dass der Kanal über den Zwischenraum mit der Umgebung der Zelle kommunizieren kann.

In einer weiteren Ausgestaltung des ersten und/oder des zweiten ringförmigen Verschlusselements können diese ein metallisches Kontaktblech mit zwei Seiten umfassen, von denen eine in Richtung der Lochscheibe weist und bevorzugt durch Verschweißung oder Verlötung mit der Lochscheibe verbunden ist. Der oder die aus dem Wickel heraustretenden Längsränder der Elektrodenstromkollektoren liegen vorzugsweise unmittelbar an der anderen Seite des oder der Kontaktbleche an und sind mit diesem oder diesen bevorzugt durch Verschweißung oder Verlötung verbunden. In Entsprechung zu der metallischen Lochscheibe weist auch das Kontaktblech eine bevorzugt zentrale Durchbrechung, insbesondere ein zentrales, kreisförmiges Loch, auf. Im Unterschied zu der zuvor erläuterten Ausführungsform liegt der Längsrand des Elektrodenstromkollektors hier nicht unmittelbar an der Lochscheibe sondern stattdessen unmittelbar an dem Kontaktblech an. Die Lochscheibe dient zum Verschließen des Gehäuses, während das Kontaktblech den Längsrand des Stromkollektors kontaktiert.

Das Kontaktblech kann in einigen bevorzugten Ausführungsforen einen kreisförmigen Umfang aufweisen, zwingend erforderlich ist dies aber nicht. In einigen Fällen kann das Kontaktblech beispielsweise ein Metallstreifen sein oder mehrere streifenförmige Segmente aufweisen, die beispielsweise in einer sternförmigen Anordnung vorliegen.

In einigen Ausführungsformen kann ein Kontaktblech verwendet werden, das mindestens einen Schlitz und/oder mindestens eine Perforierung aufweist. Diese können dazu dienen, einer Verformung des Kontaktblech bei der Herstellung einer Schweißverbindung zu dem Längsrand des Elektrodenstromkollektors entgegenzuwirken. Auch soll so gewährleistet werden, dass sicher ein eindosierter Elektrolyt gut verteilen kann und etwaig auftretende Gase aus dem Inneren des Elektrodenverbundes entweichen können.

Die zur Lochscheibe weisende Seite des Kontaktblech ist bevorzugt derart ausgebildet, dass bei einem unmittelbaren Kontakt des Kontaktblech mit der Lochscheibe eine zweidimensionale Kontaktfläche vorliegt, das Kontaktblech und die Lochscheibe also zumindest bereichsweise flach aufeinander liegen.

In einer bevorzugten Ausführungsform handelt es sich bei dem Kontaktblech um ein flaches Blechteil, das sich nur in einer Ebene erstreckt, in anderen Ausführungsformen kann es auch ein profiliertes Blechteil sein. Insbesondere ist möglich, dass es auf der mit dem Längsrand des Elektrodenstromkollektors in Kontakt stehenden Seite einen oder mehrere Stege oder längliche Vertiefungen aufweist. Durch solche Stege oder Vertiefungen kann die Verbindung zu einem unmittelbar anliegenden Längsrand erleichtert werden.

Bevorzugt stehen das Kontaktblech und die Lochscheibe in starrem, weiter bevorzugt in starrem, unmittelbarem Kontakt miteinander. In diesem Fall sind sie besonders bevorzugt durch Verschweißung oder Verlötung aneinander fixiert.

Es ist besonders bevorzugt, dass sich die metallische Lochscheibe und/oder das Kontaktblech durch mindestens eines der unmittelbar folgenden Merkmale a. und b. auszeichnen:
a. Die verwendete metallische Lochscheibe und/oder das verwendete Kontaktblech weist bevorzugt eine Dicke im Bereich von 50 µm bis 600 µm, bevorzugt im Bereich von 150 µm bis 350 µm, auf.
b. Die metallische Lochscheibe und/oder das Kontaktblech besteht aus legiertem oder unlegiertem Aluminium, legiertem oder unlegiertem Titan, legiertem oder unlegiertem Nickel oder legiertem oder unlegiertem Kupfer, aber gegebenenfalls auch aus Edelstahl (beispielsweise vom Typ 1.4303 oder 1.4404) oder aus vernickeltem Stahl.

Es ist besonders bevorzugt, dass die unmittelbar vorstehenden Merkmale a. und b. in Kombination realisiert sind.

Wenn die Kontaktelemente sowohl die metallische Lochscheibe als auch das Kontaktblech umfassen, so bestehen das Kontaktblech und die metallische Lochscheibe aus stofflicher Sicht bevorzugt beide aus dem gleichen oder zumindest aus einem chemisch verwandten Material.

In weiteren Ausführungsformen kann der äußere Rand des ersten und/oder des zweiten ringförmigen Verschlusselements beispielsweise L-förmig in einem Winkel von 90° umgebogen sein, um so eine Verbindung zwischen dem ringförmigen Verschlusselement und dem ersten (äußeren) rohrförmigen Gehäuseteil zu erleichtern. In entsprechender Weise können vergleichbare Ausgestaltungen im Bereich des inneren Randes des ersten und/oder des zweiten ringförmigen Verschlusselements vorgesehen sein, um die Verbindung zwischen dem zweiten (inneren) rohrförmigen Gehäuseteil und dem ringförmigen ersten und/oder zweiten Verschlusselement im Bereich zu erleichtern.

### Gehäuse

Bevorzugt ist das Gehäuse der erfindungsgemäßen Energiespeicherzelle nicht wie herkömmliche Energiespeicherzellen aus einem Gehäusebecher und einem Deckel aufgebaut, sondern umfasst einen zentralen hohlzylindrischen Teil, der außen von dem ersten rohrförmigen Gehäuseteil und innen von dem zweiten rohrförmigen Gehäuseteil gebildet wird. Dieser zentrale Teil des Gehäuses wird auf beiden Seiten von den ringförmigen Verschlusselementen verschlossen, die gewissermaßen einen oberen und einen unteren Deckel bilden. Produktionstechnisch bietet dies Vorteile, da für die Herstellung der rohrförmigen Gehäuseteile, anders als bei Gehäusebechern, keine Tiefziehwerkzeuge benötigt werden.

Das erste und/oder das zweite rohrförmige Gehäuseteil ist oder sind bevorzugt metallisch ausgebildet. Grundsätzlich können sie aber auch aus elektrisch isolierenden Materialien bestehen, beispielsweise aus einem Kunststoff.

Das erste rohrförmige Gehäuseteil kann einen kreisförmigen Rand aufweisen, der radial nach innen über den Außenrand des ringförmigen Verschlusselements, insbesondere den Außenrand der metallische Lochscheibe, umgebogen ist. Das zweite (innere) rohrförmige Gehäuseteil kann ebenfalls einen kreisförmigen Rand aufweisen, der radial nach außen über den Innenrand des ringförmigen Verschlusselements, insbesondere den Innenrand der metallische Lochscheibe, umgebogen ist. Das radiale Umbiegen der Ränder des Verschlusselements ist eine fakultative Maßnahme, die zum Fixieren der ringförmigen Verschlusselemente nicht zwingend benötigt wird, ungeachtet dessen aber zweckmäßig sein kann.

Insbesondere wenn die erfindungsgemäße Zelle als Lithium-Ionen-Zelle ausgestaltet ist, hängt die Wahl des Materials, aus dem der Gehäusebecher, die Metallscheibe und/oder das Kontaktblech und das Verschlusselement bzw. dessen oder deren Komponenten gefertigt werden, davon ab, ob der Anoden- oder der Kathodenstromkollektor an das jeweilige Gehäuseteil angebunden ist. Bevorzugt sind grundsätzlich die gleichen Materialien, aus denen die Stromkollektoren selbst gefertigt werden. Die genannten Gehäuseteile können also beispielsweise aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin können das Gehäuse und dessen Komponenten aus mehrschichtigen Materialien (engl.: Clad Materials) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen beispielsweise die Innenseite des Gehäusebechers bzw. des Bodens des Gehäusebechers.

Insbesondere das erste rohrförmige Gehäuseteil kann auch aus einem nicht-metallischen Material bestehen, beispielsweise aus Kunststoff. Besonders vorteilhaft sind dabei die elektrisch isolierenden Eigenschaften des Kunststoffs.

Die Dicke der Komponenten des Gehäuses kann beispielsweise im Bereich von 50 µm bis 600 µm, bevorzugt im Bereich von 150 µm bis 350 µm liegen.

Weitere geeignete Materialien sind dem Fachmann bekannt.

### Verschlussvarianten

Grundsätzlich ist es möglich, das erste und/oder das zweite ringförmige Verschlusselement mit oder ohne Dichtungen zu verbauen. Ein Verschluss ausschließlich mit Dichtungen würde allerdings in gleich vier voneinander getrennten Dichtungsbereichen resultieren, was zu Problemen führen könnte. Es ist es daher bevorzugt, dass
a. das erste und das zweite ringförmige Verschlusselement derart angeordnet sind, dass ihre äußeren Ränder entlang einer umlaufenden Kontaktzone an der Innenseite des rohrförmig ausgebildeten ersten Gehäuseteils anliegen, und
b. die äußeren Ränder des ersten und des zweiten ringförmigen Verschlusselements mit dem rohrförmig ausgebildeten Gehäuseteil jeweils über eine umlaufende Schweißnaht verbunden sind.

Damit die äußeren Ränder des ersten und des zweiten ringförmigen Verschlusselements an der Innenseite entlang der umlaufenden Kontaktzone anliegen können, ist es bevorzugt, dass das rohrförmige Gehäuseteil zumindest in den Abschnitten, in denen die Ränder anliegen, einen kreisförmigen Querschnitt aufweist. Zweckmäßigerweise können diese Abschnitte hierfür hohlzylindrisch ausgebildet sein. Der Innendurchmesser des rohrförmigen Gehäuseteils ist in diesen Abschnitten entsprechend an den Außendurchmesser der Ränder der Verschlusselemente, insbesondere an den Außendurchmesser der oben beschriebenen Lochscheibe, angepasst.

Die Verschweißung der äußeren und der inneren Ränder der Verschlusselemente mit dem ersten rohrförmigen Gehäuseteil und dem zweiten rohrförmigen Gehäuseteil kann insbesondere mittels eines Lasers durchgeführt werden. Alternativ ist es aber auch möglich, die Verschlusselemente durch Verlötung oder Verklebung zu fixieren. Eine Verklebung kommt insbesondere dann in Frage, wenn die rohrförmigen Gehäuseteile nicht metallisch ausgebildet sind sondern beispielsweise aus einem elektrisch isolierenden Material wie einem Kunststoff bestehen.

In einigen besonders bevorzugten Ausgestaltungen umfasst mindestens eines der ringförmigen Verschlusselemente mindestens einen Polstift (gegebenenfalls auch zwei oder mehr Polstifte), der elektrisch mit einem Kontaktblech eines der Verschlusselemente verbunden ist und durch eine Durchbrechung in einer Lochscheibe des gleichen Verschlusselements aus dem Gehäuse der Energiespeicherzelle herausgeführt ist/sind. Dabei umfasst das betroffene Verschlusselement vorzugsweise mindestens ein Isoliermittel, das den mindestens einen Polstift und/oder das Kontaktblech gegen die Lochscheibe elektrisch isoliert.

Der Polstift kann durch Verschweißung oder Verlötung an dem Kontaktblech fixiert sein. Gegen die Lochscheibe ist er vorzugsweise mittels eines Isoliermittels elektrisch isoliert, welches bevorzugt gleichzeitig eine Dichtungsfunktion innehat.

Bei dem Isoliermittel kann es sich insbesondere um eine übliche Kunststoffdichtung handeln, die zweckmäßigerweise chemisch beständig gegenüber den jeweils verwendeten Elektrolyten ist. Dem Fachmann auf dem Gebiet primärer und sekundärer Energiespeicherzellen sind geeignete Dichtungsmaterialien bekannt. In alternativen bevorzugten Ausführungsformen können auch Gläser oder keramische und/oder glaskeramische Massen als Isoliermittel verwendet werden.

### Verschweißung des Kontaktelements mit dem einen der ersten Längsränder

Bei den verschiedenen Ausgestaltungen des erfindungsgemäßen Energiespeicherelements ist stets ein Längsrand eines Stromkollektors durch Verschweißung an einem der ringförmigen Verschlusselemente angebunden, bevorzugt unmittelbar an die metallische Lochscheibe oder an das Kontaktblech des Verschlusselements.

Das Konzept der Verschweißung der Ränder von Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

Vorliegend ergibt sich in Folge des Kontakts des einen der ersten Längsränder mit dem Kontaktelement oder einer Komponente des Kontaktelements eine linienartige Kontaktzone, die im Falle der spiralförmig aufgewickelten Elektroden einen spiralförmigen Verlauf aufweist. Entlang dieser linien- und bevorzugt spiralförmigen Kontaktzone oder quer dazu kann mittels geeigneter Schweißverbindungen eine möglichst gleichmäßige Anbindung des Längsrands an das Kontaktelement oder an die Komponente des Kontaktelements realisiert werden.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch die oben genannten Verschweißungen mit dem Kontakt- oder dem Verschlusselement, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Energiespeicherzelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die streifenförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die streifenförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt streifenförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der Energiespeicherzelle

Die erfindungsgemäße Energiespeicherzelle ist eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Energiespeicherzellen im Bereich von 15 mm bis 150 mm. Der Durchmesser der zylindrischen Rundzellen ist mindesten 30 mm und liegt bevorzugt im Bereich von mindestens 30 mm bis 60 mm. Innerhalb dieser Bereiche sind Formfaktoren von beispielsweise 32 x 700 (Durchmesser mal Höhe in mm) oder 32 x 900 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

In besonders bevorzugter Weise zeichnet sich die erfindungsgemäße Energiespeicherzelle durch das folgende zusätzliche Merkmal a. aus:
a. Die Energiespeicherzelle hat einen Außendurchmesser von mindestens 32 mm.

Besonders bevorzugte Formfaktoren für die zylindrische Energiespeicherzelle sind folgendermaßen: 32 x 75 oder32 x91 oder 67 x 172 (Durchmesser mal Höhe in mm). Die Vorteile der Erfindung kommen bei Energiespeicherzellen mit einer solchen Größe, bei denen das Temperaturmanagement bzw. die Temperierungsmöglichkeiten besonders kritisch sind, besonders zum Tragen.

Die Nennkapazität der als Lithium-Ionen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

In einer besonders bevorzugten Ausführungsform der Erfindung zeichnet sich die erfindungsgemäße Energiespeicherzelle durch das folgende zusätzliche Merkmal aus:
a. Das Kontaktelement umfasst ein Sicherheitsventil, über das bei Überschreiten eines weiteren Druckschwellwerts Druck aus dem Gehäuse entweichen kann.

Bei diesem Sicherheitsventil kann es sich beispielsweise um eine Berstmembran, ein Berstkreuz oder eine ähnliche Sollrissstelle handeln, die bei einem definierten Überdruck in der Zelle aufreißen kann, um eine Explosion der Zelle zu verhindern.

Besonders bevorzugt kann die Lochscheibe des Kontaktelements das Sicherheitsventil, insbesondere in Form einer Sollrissstelle, aufweisen.

### Erfindungsgemäße Batterie

Weiterhin umfasst die Erfindung eine Batterie mit mindestens zwei Energiespeicherzellen gemäß der obigen Beschreibung. Die Batterie zeichnet sich weiterhin durch eine Einrichtung zur Temperierung der Energiespeicherzellen über die beidseitig offenen Kanäle der Energiespeicherzellen aus. Die einzelnen Energiespeicherzellen können in an sich bekannter Weise parallel oder seriell miteinander verschaltet sein.

In besonders bevorzugter Weise können die Energiespeicherzellen der Batterie innerhalb von Batteriemodulen angeordnet sein, wobei die Batteriemodule zu einer Batterie zusammengeschaltet sein können. In besonders bevorzugter Weise sind jeweils zwei oder mehr Energiespeicherzellen in Form von Batteriemodulen zusammengefasst, wobei zwei oder mehr der Batteriemodule in an sich bekannter Weise eine Batterie bilden. Die Erfindung umfasst daher auch derartige Batteriemodule.

In bevorzugter Weise zeichnet sich die Batterie durch das folgende zusätzliche Merkmal aus:
a. Die Einrichtung zur Temperierung der Energiespeicherzellen umfasst Mittel zur Einleitung eines Temperiermediums, insbesondere eines der oben genannten Temperiermedien, in die beidseitig offenen Kanäle der Energiespeicherzellen.

Das Temperiermedium kann durch die einzelnen Energiespeicherzellen hindurchgeleitet werden, um so in sehr effektiver Weise einen Temperaturaustausch zu ermöglichen. Auf diese Weise kann vor allem eine Kühlung der Energiespeicherzellen erreicht werden. Weiterhin ist auch allgemein eine Temperierung, also auch eine Erwärmung der Energiespeicherzellen, bei Bedarf möglich.

Im Fall eines gasförmigen Temperiermediums zeichnet sich die erfindungsgemäße Batterie vorzugsweise durch mindestens eines der folgenden zusätzlichen Merkmale aus:
a. Die Einrichtung zur Temperierung der Energiespeicherzellen umfasst Mittel zum Antrieb eines gasförmigen Temperiermediums, insbesondere eines Luftstroms.
b. Die Einrichtung zur Temperierung der Energiespeicherzelle umfasst Mittel zur Lenkung eines gasförmigen Temperiermediums, insbesondere eines Luftstroms, durch die beidseitig offenen Kanäle der Energiespeicherzellen hindurch.

Vorzugsweise sind die unmittelbar vorgenannten Merkmale a. und b. in Kombination miteinander verwirklicht.

Bei dem Mittel zum Antrieb des gasförmigen Temperiermediums kann es sich beispielsweise um einen Ventilator oder um eine andere Einrichtung zum Blasen oder Saugen von Luft oder einem anderen Gas handeln. Ein solches Antriebsmittel kann außerhalb der Batterie vorgesehen sein und den Gasstrom innerhalb der Batterie über entsprechende Lüftungsöffnungen oder Ähnliches bewerkstelligen. Weiterhin kann ein solches Antriebsmittel auch innerhalb einer Batterie angeordnet sein.

Zusätzlich oder alternativ können Lenkungsmittel zur zielgerichteten Lenkung des Temperiermediums vorgesehen sein, beispielsweise Lenkbleche oder Lenkschienen aus Kunststoff, entsprechende Durchbrechungen in Batteriezellhaltern oder Ähnliches, so dass das gasförmige Temperiermedium gezielt durch die beidseitig offenen Kanäle innerhalb der Energiespeicherzellen geleitet wird. Darüber hinaus ist es vorzugweise auch vorgesehen, dass das Temperiermedium die Energiespeicherzellen auch von außen umfließt.

In Ausgestaltungen der erfindungsgemäßen Batterie, bei denen ein flüssiges Temperiermedium vorgesehen ist, zeichnet sich die erfindungsgemäße Batterie vorzugsweise durch mindestens eines der folgenden zusätzlichen Merkmale aus:
a. Die Einrichtung zur Temperierung der Energiespeicherzellen umfasst Pumpmittel zur Bewegung eines flüssigen Temperiermediums.
b. Die Einrichtung zur Temperierung der Energiespeicherzelle umfasst Mittel zur Lenkung eines flüssigen Temperiermediums durch die beidseitig offenen Kanäle der Energiespeicherzellen hindurch.

Vorzugsweise sind die vorgenannten Merkmale a. und b. gemeinsam miteinander verwirklicht.

Bei den Pumpmitteln kann es sich um übliche Pumpen, beispielsweise peristaltische Pumpen, handeln, mit denen das flüssige Temperiermedium, beispielsweise Wasser oder ein anderes Kühl- bzw. Temperiermedium, durch das Innere der Batterie und insbesondere durch die beidseitig offenen Kanäle der Energiespeicherzellen hindurchgeleitet werden kann. Diese Pumpmittel können innerhalb der Batterie oder, besonders bevorzugt, außerhalb der Batterie angeordnet sein, wobei bei einer Anordnung außerhalb der Batterie entsprechende Zuleitungen und Ableitungen für das flüssige Temperiermedium in die Batterie hinein und aus der Batterie heraus vorgesehen sind.

Zusätzlich oder alternativ können Lenkungsmittel innerhalb der Batterie für das flüssige Temperiermedium vorgesehen sein, mit denen das flüssige Temperiermedium gezielt durch die beidseitig offenen Kanäle der Energiespeicherzellen hindurchgeleitet wird. Hierfür können beispielsweise Metallschienen oder Schienen aus Kunststoff oder Leitungen aus Kunststoff oder geeignete Durchbrüche in Zellhaltern oder Ähnliches innerhalb der Batterie vorgesehen sein. Darüber hinaus ist es vorzugweise auch vorgesehen, dass das Temperiermedium die Energiespeicherzellen auch von außen umfließt.

In einer weiteren besonders bevorzugten Ausgestaltung der erfindungsgemäßen Batterie zeichnet sich die Batterie durch die folgenden zusätzlichen Merkmale aus:
a. in den beidseitig offenen Kanälen der Energiespeicherzellen sind metallisches Stäbchen oder Röhrchen als Temperiervermittler eingebracht.
b. Die metallischen Stäbchen oder Röhrchen sind an Kühl- und/oder Heizmittel angekoppelt.

Die vorgenannten Merkmale a. und b. sind insbesondere gemeinsam verwirklicht.

Die metallischen Stäbchen oder Röhrchen können hierbei als *Heatpipe* in der oben bereits beschriebenen Weise eingesetzt werden, wobei gut wärmeleitfähige Materialien verwendet werden, die in besonders effektiver Weise für eine Kühlung oder Erwärmung über das Innere der Energiespeicherzellen genutzt werden können. Zweckmäßigerweise sind dabei die metallischen Stäbchen oder Röhrchen an Kühl- und/oder Heizmittel angekoppelt, beispielsweise an an sich bekannte Kühlelemente oder Ähnliches.

Bei der Verwendung eines flüssigen Temperiermediums sowohl über die beidseitig offenen Kanäle der Energiespeicherzellen als auch gegebenenfalls über den äußeren Gehäusemantel der Energiespeicherzellen ist zweckmäßigerweise eine geeignete Abdichtung der Energiespeicherzellen insbesondere im unteren und oberen Bereich des Zellmantels vorgesehen. Gegebenenfalls kann eine Versiegelung der Metalloberflächen der Energiespeicherzellen beispielsweise durch eine Teflon-Beschichtung oder Vergleichbares vorgesehen sein.

Ein Batteriemodul der erfindungsgemäßen Batterie kann beispielsweise derart aufgebaut sein, dass es mindestens zwei Batterieblöcke aufweist, die jeweils eine Mehrzahl von zylindrischen Energiespeicherzellen umfassen. Innerhalb der Batterieblöcke können die Energiespeicherzellen in entsprechenden Aufnahmen eines Zellhalters, beispielsweise eines Kunststoff-Zellhalters, angeordnet sein, wobei die Längsachsen der zylindrischen Energiespeicherzellen parallel zueinander liegen. In den Zellhaltern können Luftdurchtrittsöffnungen oder Öffnungen für den Durchtritt eines anderen gasförmigen oder eines flüssigen Temperiermediums vorgesehen sein, so dass das Temperiermedium die Batterieblöcke parallel zu den Längsachsen der Energiespeicherzellen durchströmen kann. Darüber hinaus können zweckmäßigerweise in den Zellhaltern Öffnungen vorhanden sein, durch die das Temperiermedium durch die beidseitig offenen Kanäle der einzelnen Energiespeicherzellen hindurchgeführt wird.

Die Batterieblöcke können mit einem gewissen Abstand aufeinandergestapelt sein, so dass sich zwischen benachbarten Batterieblöcken in dem Stapel jeweils ein Stapelzwischenraum ergibt, durch den das Temperiermedium geführt werden kann.

Weiterhin ist zweckmäßigerweise ein Gehäuse für das Batteriemodul vorgesehen, das den Stapel aus Batterieblöcken des jeweiligen Batteriemoduls umfasst. Das Gehäuse kann dabei einen Einlass und einen Auslass für das Temperiermedium aufweisen. Im Fall einer Luftkühlung kann beispielsweise ein Lufteinlass und ein Luftauslass vorgesehen sein. Zwischen dem Lufteinlass und dem Luftauslass kann ein Luftstrom mittels eines Ventilators erzeugt werden. In vergleichbarer Weise können Anschlüsse für ein flüssiges Temperiermedium vorgesehen sein, wobei das Temperiermedium mit entsprechenden Pumpmitteln bewegt wird.

### Herstellungsverfahren

Die Erfindung umfasst weiterhin ein Verfahren zur Herstellung der beschriebenen Energiespeicherzelle. Dieses Verfahren umfasst die folgenden Schritte:
a. Bereitstellung eines Elektroden-Separator-Verbunds mit mindestens der Sequenz Anode / Separator / Kathode, der in Form eines hohlzylindrischen Wickels mit zwei endständigen Stirnseiten und einem dazwischen liegenden Wickelmantel vorliegt, wobei die Elektroden jeweils einen mit einem Elektrodenmaterial beschichteten Stromkollektor mit einem ersten Längsrand und einem zweiten Längsrand aufweisen und einer der Längsränder aus einer der endständigen Stirnseiten und der andere der Längsränder aus der anderen der endständigen Stirnseiten austritt,
b. Bereitstellung der Komponenten eines Gehäuses, nämlich
   - eines ersten ringförmigen Verschlusselements mit einem Außen- und einem Innendurchmesser,
   - eines zweiten ringförmigen Verschlusselements mit einem Außen- und einem Innendurchmesser,
   - eines ersten rohrförmigen Gehäuseteils mit zwei endständigen kreisförmigen Öffnungen, wobei der Durchmesser des ersten rohrförmigen Gehäuseteils auf den Außendurchmesser des ersten ringförmigen Verschlusselements und des zweiten ringförmigen Verschlusselements abgestimmt ist,
   - eines zweiten rohrförmigen Gehäuseteils mit zwei endständigen kreisförmigen Öffnungen, wobei der Durchmesser des zweiten rohrförmigen Gehäuseteils auf den Innendurchmesser des ersten ringförmigen Verschlusselements und des zweiten ringförmigen Verschlusselements abgestimmt ist,
c. Montage des Gehäuses und Anordnen des Elektroden-Separator-Verbundes in dem Gehäuse,
d. Kontaktieren des Elektroden-Separator-Verbundes mit den ringförmigen Verschlusselementen des Gehäuses durch Verschweißen,
e. Verschließen und/oder Abdichten des Gehäuses.

In einer Variante des Verfahrens ist es zum Anordnen des Elektroden-Separator-Verbundes in dem Gehäuse erforderlich, das zweite rohrförmige Gehäuseteil in das Zentrum des hohlzylindrischen Wickels einzuschieben, wobei der Wickel selbst in das erste rohrförmige Gehäuseteil eingeschoben werden muss.

In einer weiteren, alternativen Variante des Verfahrens umfasst dieses den folgenden Schritt:
a. Der Elektroden-Separator-Verbund in Form des hohlzylindrischen Wickels wird hergestellt, indem die Elektroden und der Separator auf dem zweiten rohrförmigen Gehäuseteil aufgewickelt werden.

Gemäß dieser Variante wird das zweite rohrförmige Gehäuseteil des Gehäuses, das einen kleineren Durchmesser als das erste rohrförmige Gehäuseteil, das letztendlich den inneren Mantel des Gehäuses bildet, aufweist, als Wickelkern bei der Bildung des Elektroden-Separator-Verbunds genutzt.

Zur elektrischen Kontaktierung der Elektroden werden die ringförmigen Verschlusselemente oder ein Teil der ringförmigen Verschlusselemente, beispielsweise ein Kontaktblech, auf die Stirnseiten aufgesetzt und mit diesen durch Verschweißung oder Verlötung verbunden. Eine Verschweißung kann beispielsweise mittels eines Lasers durch die metallische Lochscheibe des ringförmigen Verschlusselements hindurch bewirkt werden. Gegebenenfalls weist mindestens eines der Verschlusselemente eine Poldurchführung auf.

Das Verschließen und Abdichten der Zelle erfolgt bevorzugt durch Verschweißung der Ränder der Verschlusselemente mit den Öffnungsrändern des ersten und des zweiten Gehäuseteils. Hierzu sind die rohrförmigen Gehäuseteile bevorzugt metallisch ausgebildet.

Wie eingangs erläutert, ist für die Funktion des elektrochemischen Systems ein Elektrolyt erforderlich. Prinzipiell sind flüssige und Festkörper-Elektrolyten möglich. Vorzugsweise wird zur Einbringung eines flüssigen Elektrolyten der Elektroden-Separator-Verbund mit dem Elektrolyten getränkt. In besonders bevorzugter Weise erfolgt die Tränkung mit einem Elektrolyten nach der Montage des Gehäuses, wobei der Elektrolyt durch eine dafür vorgesehene Öffnung beispielsweise in einem der ringförmigen Verschlusselemente oder in einem anderen Gehäuseteil eingefüllt werden kann. Nach dem Einfüllen des Elektrolyten wird die Öffnung verschlossen, beispielsweise durch Verklebung oder Verschweißung.

Der Verschluss der Öffnung kann beispielsweise durch Aufschweißen eines Blechs erfolgen, das eine Berstmembran, ein Berstkreuz oder eine ähnliche Sollrissstelle umfasst, die bei einem definierten Überdruck in der Zelle aufreißen kann, um eine Explosion der Zelle zu verhindern.

### KURZBESCHREIBUNG DER ZEICHNUNGEN

Weitere Merkmale und Vorteile der Erfindung ergeben sich aus der nachfolgenden Beschreibung von bevorzugten Ausführungsbeispielen in Verbindung mit den Zeichnungen. Die einzelnen Merkmale können dabei jeweils für sich oder in Kombination miteinander verwirklicht sein.

In den Zeichnungen zeigen schematisch:
- Fig. 1: Schräge Seitenansicht einer erfindungsgemäßen Energiespeicherzelle;
- Fig. 2: Schematische Längsschnittansicht einer erfindungsgemäßen Energiespeicherzelle;
- Fig. 3: Schematische Längsschnittansicht einer erfindungsgemäßen Energiespeicherzelle mit Details der Elektroden;
- Fig. 4: Schematische Schnittansicht eines Batteriemoduls; und
- Fig. 5: Schematische Seitenansicht einer weiteren Ausführungsform einer erfindungsgemäßen Energiespeicherzelle.

### DETAILLIERTE BESCHREIBUNG DER AUSFÜHRUNGSBEISPIELE

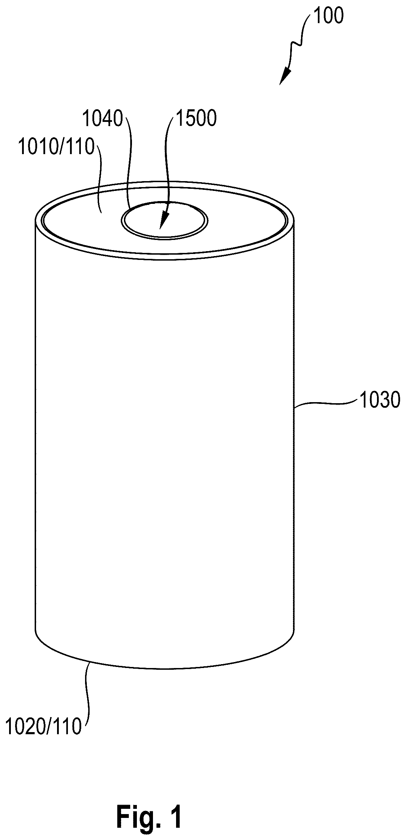

**Fig. 1** zeigt eine erfindungsgemäße zylindrische Energiespeicherzelle 100 von außen. Die Energiespeicherzelle 100 ist in Form einer zylindrischen Rundzelle realisiert. Der im Inneren der Energiespeicherzelle 100 angeordnete hohlzylindrische Wickel mit dem Elektroden-Separator-Verbund ist hier nicht sichtbar. Der äußere, zylindrische Gehäusemantel wird von einem ersten rohrförmigen Gehäuseteil 1030 gebildet. Die obere Stirnseite der Energiespeicherzelle 100 wird von einem ersten ringförmigen Verschlusselement 1010 gebildet, wobei das ringförmige Verschlusselement gleichbedeutend mit dem Kontaktelement 110 ist. In entsprechender Weise ist die untere Stirnseite mit einem weiteren ringförmigen Verschlusselement 1020 / Kontaktelement 110 gebildet. Im Inneren der Energiespeicherzelle 100 befindet sich ein zweites (inneres) rohrförmiges Gehäuseteil 1040, das durch seine hohlzylindrische Form einen beidseitig offenen Kanal 1500 innerhalb der Energiespeicherzelle 100 definiert.

Das erste (äußere) rohrförmige Gehäuseteil 1030 ist im Bereich seiner endständigen kreisförmigen Öffnungen mit den äußeren Rändern der die Stirnseiten bildenden ringförmigen Verschlusselemente 1010, 1020 beispielsweise durch Verschweißung, Verlötung oder Verklebung verbunden. Die Art der Verbindung hängt auch vom Material ab, aus dem das rohrförmige Gehäuseteil 1030 besteht. Die inneren Ränder der ringförmigen Verschlusselemente 1010, 1020 sind mit dem zweiten (inneren) rohrförmigen Gehäuseteil 1040 bzw. dessen endständigen kreisförmigen Öffnungen verbunden, beispielsweise ebenfalls durch Verschweißung, Verlötung oder Verklebung.

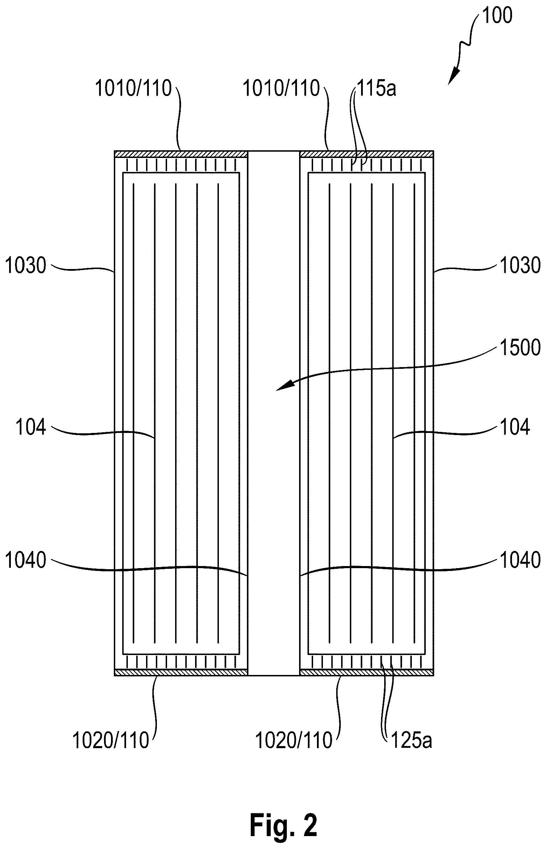

**Fig. 2** zeigt einen schematischen Längsschnitt durch eine weitere Ausführungsform einer erfindungsgemäßen Energiespeicherzelle 100. Der hohlzylindrisch geformte Elektroden-Separator-Verbund 104 befindet sich im Innenraum der Energiespeicherzelle 100. Er umfasst mindestens eine bandförmige Anode, mindestens einen bandförmigen Separator und mindestens eine bandförmige Kathode, wobei zur besseren Übersicht hier nicht alle Einzelbestandteile der Elektroden dargestellt sind. Die bandförmige Anode wird von einem bandförmigen Anodenstromkollektor gebildet, der mit negativem Aktivmaterial beschichtet ist, wobei zumindest der Randstreifen 115a entlang eines Längsrands des Anodenstromkollektors frei von Aktivmaterial ist. Die bandförmige Kathode wird von einem bandförmigen Kathodenstromkollektor gebildet, der mit positivem Aktivmaterial beschichtet ist, wobei zumindest der Randstreifen 125a entlang eines Längsrands des Kathodenstromkollektors frei von Aktivmaterial ist. Der Randstreifen 115a des Anodenstromkollektors, der frei von Aktivmaterial ist, und der Randstreifen 125a des Kathodenstromkollektors, der frei von Aktivmaterial ist, ragen aus jeweils einer Stirnseite des zylindrischen Wickels 104 heraus.

Der äußere Gehäusemantel wird von dem ersten rohrförmigen Gehäuseteil 1030 gebildet. Nach innen wird der Innenraum der Energiespeicherzelle 100 durch das zweite rohrförmige Gehäuseteil 1040 begrenzt, wodurch ein beidseitig offener Kanal 1500 im Inneren der Energiespeicherzelle 100 definiert wird, der zu beiden Stirnseiten der Energiespeicherzelle 100 hin offen ist. Die rohrförmigen Gehäuseteile 1030 und 1040 sind in dieser Ausführungsform aus einem elektrisch nicht leitenden Kunststoff ausgebildet. Sie sind mit den ringförmigen Verschlusselementen durch Verklebung verbunden.

Das Verschlusselement 1010 dient vorliegend auch als Kontaktelement und wird entsprechend auch mit dem Bezugszeichen 110 gekennzeichnet. Die elektrische Kontaktierung einer der Elektroden des Elektroden-Separator-Verbunds 104 erfolgt über dieses Verschlusselement 1010 bzw. Kontaktelement 110, indem der aus dem wickelförmigen Elektroden-Separator-Verbund 104 herausragende, nicht mit Elektrodenmaterial beschichtete Längsrand 115a direkt an die Innenseite des ringförmigen Verschlusselements 1010 / Kontaktelements 110 angebunden ist, vorzugsweise durch Verschweißung oder Verlötung. In entsprechender Weise ist auch der unten herausragende Längsrand 125a der anderen Elektrode direkt an die Innenseite des ringförmigen Verschlusselements 1020 / Kontaktelements 110 angebunden.

Prinzipiell ist es auch möglich, dass nur an einer Stirnseite der Energiespeicherzelle eine Elektrode direkt über deren unbeschichteten Längsrand an dem ringförmigen Verschlusselement kontaktiert ist und dass die andere Elektrode in herkömmlicher Weise beispielsweise über einen Ableiter mit dem Gehäuse kontaktiert ist.

Durch den beidseitig offenen Kanal 1500 im Inneren der Energiespeicherzelle 100 wird ein besonders effektives Kühl- bzw. Temperierkonzept für die Energiespeicherzelle möglich, da eine Temperierung mit einem geeigneten Temperiermedium über den beidseitig offenen Kanal 1500 erfolgen kann und so die Energiespeicherzelle 100 sowohl von innen als auch gegebenenfalls von außen mit dem Temperiermedium erreicht werden kann.

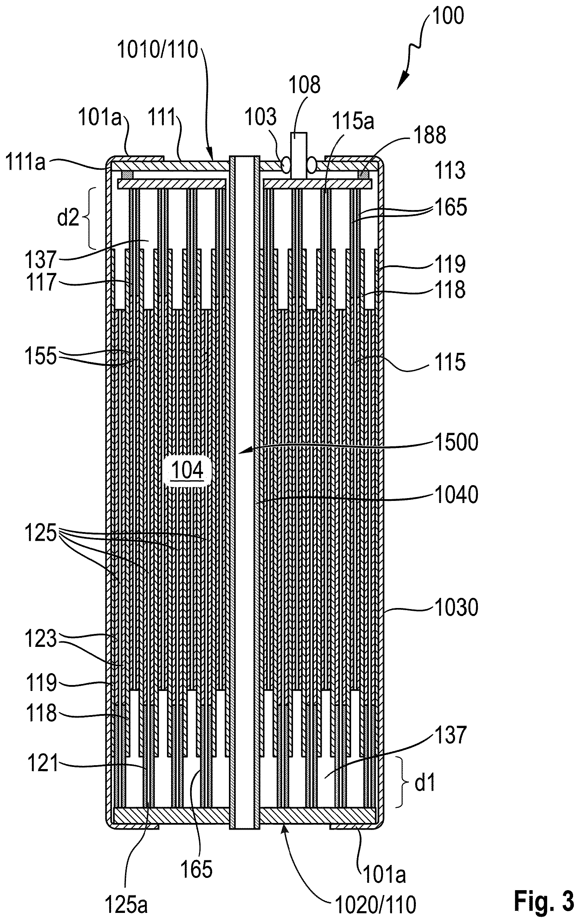

**Fig. 3** illustriert weitere mögliche Details des Aufbaus der erfindungsgemäßen Energiespeicherzelle 100 insbesondere im Hinblick auf die Ausgestaltung der ringförmigen Verschlusselemente 1010, 1020 bzw. der Kontaktelemente 110.

Auch die in Fig. 3 dargestellte Energiespeicherzelle 100 weist ein Gehäuse auf, das von dem äußeren, rohrförmigen Gehäuseteil 1030 und dem inneren, rohrförmigen Gehäuseteil 1040 und den ringförmigen Verschlusselementen 1010, 1020 bzw. den Kontaktelementen 110 gebildet wird. Das Gehäuse schließt einen Innenraum 137 ein, in dem der als Wickel ausgebildete Elektroden-Separator-Verbund 104 axial ausgerichtet ist. Das zweite rohrförmige Gehäuseteil 1040 umschließt und definiert den beidseitig offenen Kanal 1500 der Energiespeicherzelle 100.

Das ringförmige Verschlusselement 1010/110 umfasst die metallische Lochscheibe 111 mit einem kreisförmigen, äußeren Rand 111a sowie zusätzlich das Kontaktblech 113 und den Polstift 108.

Die metallische Lochscheibe 111 ist derart angeordnet, dass ihr äußerer Rand 111a entlang einer umlaufenden Kontaktzone an der Innenseite des ersten rohrförmigen Gehäuseteils 1030 anliegt. Ihr Rand 111a entspricht dem Rand des ringförmigen Verschlusselements 1010/110 und ist mit dem ersten rohrförmigen Gehäuseteil 1030 über eine umlaufende Schweißnaht verbunden. Darüber hinaus umfasst das erste rohrförmige Gehäuseteil 1030 einen endständigen abgewinkelten Rand 101a, der um den äußeren Rand 111a der metallische Lochscheibe 111 radial nach innen (hier um ca. 90 °) umgebogen ist.

Der Elektroden-Separator-Verbund 104 liegt in Form eines hohlzylindrischen Wickels mit zwei endständigen Stirnseiten vor, zwischen denen sich ein umlaufende Wickelmantel erstreckt, der an der Innenseite des ersten rohrförmigen Gehäuseteils 1030 anliegt. Der Hohlraum im Zentrum des Wickels wird von dem zweiten Gehäuseteil ausgefüllt. Der Elektroden-Separator-Verbund 104 ist aus einer positiven Elektrode und einer negativen Elektrode sowie den Separatoren 118 und 119 gebildet, die jeweils bandförmig ausgebildet und spiralförmig gewickelt sind. Die zwei Stirnseiten des Elektroden-Separator-Verbunds 104 werden durch die Längsränder der Separatoren 118 und 119 gebildet. Aus diesen Stirnseiten ragen die Längsränder der Stromkollektoren 115 und 125 hervor. Die entsprechenden Überstände sind mit d1 und d2 bezeichnet.

Aus der oberen Stirnseite des Elektroden-Separator-Verbunds 104 tritt der Längsrand des Anodenstromkollektors 115 aus, aus der unteren Stirnseite der Längsrand des Kathodenstromkollektors 125. Der Anodenstromkollektor 115 ist in einem bandförmigen Hauptbereich mit einer Schicht aus einem negativen Elektrodenmaterial 155 beladen. Der Kathodenstromkollektor 125 ist in einem bandförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Das metallische Kontaktblech 113 umfasst zwei Seiten, von denen eine in Richtung der metallischen Lochscheibe 111 weist. Zwischen der metallischen Lochscheibe 111 und dem Kontaktblech 113 ist ein Distanzhalter 188 aus Kunststoff angeordnet, der verhindert, dass sich die Lochscheibe 111 und das Kontaktblech 113 berühren. An der anderen Seite des Kontaktblechs 113 steht der Längsrand 115a über seine gesamte Länge in unmittelbarem Kontakt mit dem Kontaktblech 113 und ist mit diesem durch Verschweißung oder Verlötung verbunden. Das Kontaktblech 113 weist eine zentrale Durchbrechung auf, durch die das Gehäuseteil 1040 geführt ist. Zwischen dem Gehäuseteil 1040 und dem Kontaktblech besteht kein unmittelbarer Kontakt. Das Verschlusselement 1010 bzw. das Kontaktelement 110 dient gleichzeitig zur elektrischen Kontaktierung der Anode und als Gehäuseteil.

Der Polstift 108 ist an das Kontaktblech 113 geschweißt und durch eine dezentrale Durchbrechung in der metallische Lochscheibe 111 aus dem Gehäuse der Energiespeicherzelle 100 herausgeführt. Das ringförmige Verschlusselement 1010 bzw. das Kontaktelement 110 umfasst weiterhin ein Isoliermittel 103, das den Polstift 108 und somit auch das mit dem Polstift 108 verschweißte Kontaktblech 113 gegen die metallische Lochscheibe 111 elektrisch isoliert. Die metallische Lochscheibe 111 steht wiederum in unmittelbarem und damit auch in elektrischem Kontakt mit dem äußeren, rohrförmigen Gehäuseteil 1030 und dem Gehäuseteil 1040. Der Polstift 108 und das Kontaktblech 113 sind gegen das äußere, rohrförmige Gehäuseteil 1030 und das innere, rohrförmige Gehäuseteil 1040 elektrisch isoliert. Sowohl das erste als auch das zweite rohrförmige Gehäuseteils 1030 und 1040 ist metallisch und damit elektrisch leitend ausgebildet.

Der Boden der Energiespeicherzelle 100 wird von dem ringförmigen Verschlusselement 1020 / Kontaktelement 110 gebildet. Dieses ist als metallische Lochscheibe ausgebildet, ohne Polstift und ohne separates Kontaktblech. Das ringförmige Verschlusselement 1020/110 ist mit dem ersten rohrförmigen Gehäuseteil 1030 und dem Gehäuseteil 1040 an dieser Seite jeweils über eine umlaufende Schweißnaht verbunden. Ebenfalls auf dieser Seite ein umgebogener Rand 101a des ersten rohrförmigen Gehäuseteils 1030 der Energiespeicherzelle 100 vorgesehen, der das ringförmige Verschlusselement 1020/110 umgreift.

Der Längsrand 125a des Kathodenstromkollektors 125 steht über seine gesamte Länge in unmittelbarem Kontakt mit der inneren Seite des ringförmigen Verschlusselements 1020/110 und ist mit diesem durch Verschweißung oder durch Verlötung verbunden. Das ringförmige Verschlusselement 1020/110 auf dieser Seite der Energiespeicherzelle 100 dient somit ebenfalls nicht nur als Teil des Gehäuses, sondern auch zur elektrischen Kontaktierung der Kathode.

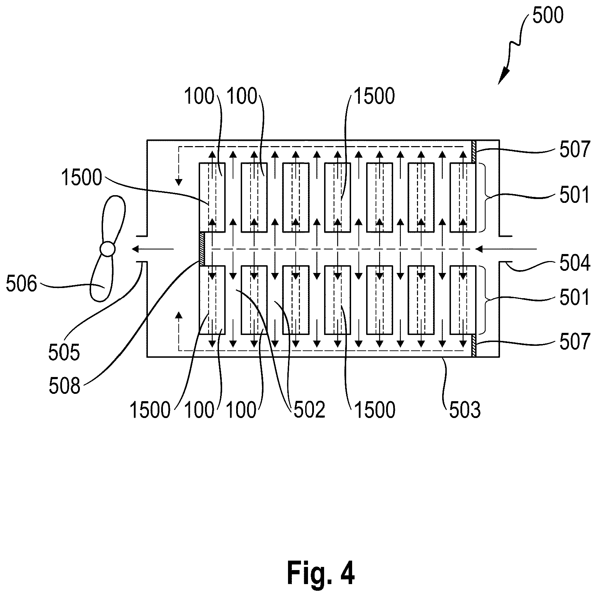

**Fig. 4** zeigt in einer schematischen Schnittdarstellung ein Batteriemodul500 für eine Batterie, wobei das Batteriemodul 500 eine Mehrzahl der erfindungsgemäßen Energiespeicherzellen 100 umfasst. Innerhalb des Batteriemoduls 500 sind die erfindungsgemäßen Energiespeicherzellen 100 in zwei Batterieblöcken 501 jeweils parallel zueinander angeordnet. Die zylindrischen Energiespeicherzellen 100 sind derart angeordnet, dass sich zwischen den einzelnen Energiespeicherzellen 100 Zwischenräume 502 ergeben, durch die ein Temperiermedium die Batterieblöcke 501 parallel zu den Längsachsen der Energiespeicherzellen 100 durchströmen kann. Die Strömrichtung des Temperiermediums ist in dieser Darstellung durch Pfeile angedeutet. Gemäß dem erfindungsgemäßen Konzept kann das Temperiermedium weiterhin die Energiespeicherzellen 100 jeweils entlang der beidseitig offenen Kanäle 1500 durchströmen.

Das Batteriemodul 500 umfasst ein Gehäuse 503 sowie hier nicht näher dargestellte Elemente zur Halterung und Positionierung der Energiespeicherzellen 100 innerhalb des Gehäuses 503. Bei diesen Elementen kann es sich insbesondere um sogenannte Zellhalter aus Kunststoff handeln, die die einzelnen Zellblöcke 501 bilden und die nach Art eines Rahmens mit entsprechenden Aufnahmen die Energiespeicherzellen 100 in geeigneter Weise positionieren und halten. Dabei sind diese Elemente zur Halterung der Energiespeicherzellen 100 derart eingerichtet, dass das Temperiermedium sowohl die Zwischenräumen 502 zwischen den einzelnen Energiespeicherzellen 100 als auch jeweils beidseitig offenen Kanäle 1500 im Inneren der Energiespeicherzellen 100 durchströmen kann.

Zwei oder mehr von derartigen Batteriemodulen 500 können eine Batterie bilden. Ein solcher modularer Aufbau einer Batterie ist besonders vorteilhaft, da einzelne Batteriemodule gegebenenfalls ausgetauscht und/oder ersetzt werden können und dass mit dem modularen Aufbau die jeweilige Batterie nach den jeweiligen Erfordernissen flexibel zusammengestellt und aufgebaut werden kann.

In dem in der Fig. 4 dargestellten Ausführungsbeispiel eines Batteriemoduls 500 ist eine Luftkühlung angedeutet, wobei die Strömung der Luft mit den Pfeilen dargestellt ist. In analoger Weise könnte auch ein anderes Temperiermedium, beispielsweise ein flüssiges Temperiermedium, genutzt werden, das mit geeigneten Pumpmitteln oder Saugmitteln bewegt wird.

Das Gehäuse 503 umfasst einen Einlass 504 für das Temperiermedium, beispielsweise für Luft, und einen Auslass 505 für das Temperiermedium, insbesondere für die Luft. In diesem Beispiel wird der Luftstrom durch einen am Auslass 505 angeordneten Ventilator 506 angetrieben.

Durch geeignete Lenkmittel 507 und 508 bzw. Abdichtmittel (Abdichtmittel 507 zwischen den Batterieblöcken und der inneren Gehäusewand im Bereich des Einlasses 504 und Abdichtmittel 508 zwischen den beiden Batterieblöcken im Bereich des Auslasses 505) wird das Temperiermedium so geführt, dass es zunächst über den Einlass 504 in einen Zwischenraum zwischen den beiden Batterieblöcken 501 geleitet wird. Von diesem Zwischenraum aus gelangt das Temperiermedium durch die Batterieblöcke 501 hindurch, wobei es hierbei einerseits durch die Zwischenräume 502 zwischen den einzelnen Energiespeicherzellen 100 und andererseits durch die einzelnen Energiespeicherzellen 100 hindurch entlang der beidseitig offenen Kanäle 1500 strömt. Nach dem Durchströmen der Batterieblöcke 501 wird das Temperiermedium in einem Zwischenraum zwischen den jeweiligen Batterieblöcken 501 und der Gehäusewandung in Richtung des Auslasses 505 geleitet.

In den Batterieblöcken 501, die hier im Schnitt gezeigt sind, sind die Energiespeicherzellen 100 vorzugsweise in einem regelmäßigen Muster in mehreren Reihen angeordnet. Beispielsweise können in einem Batterieblock 501 sechzehn Reihen mit jeweils zwölf zylindrischen Energiespeicherzellen 100 vorgesehen sein. Die Zellen 100 jeder Reihe können in gleicher Orientierung angeordnet sein. Dazu versetzt können in der benachbarten Reihe ebenfalls zwölf Energiespeicherzellen 100, jedoch mit umgekehrter Polarität angeordnet sein. Dabei kann jeweils eine serielle Verschaltung von sechzehn Energiespeicherzellen 100 über die Reihen hinweg im Zickzack vorgesehen sein.

Mit den erfindungsgemäßen Energiespeicherzellen 100 in einer solchen Anordnung kann ein Kühl- bzw. ein Temperierkonzept verwirklicht werden, bei dem die einzelnen Energiespeicherzellen nicht nur von außen, sondern auch von innen mit dem Temperiermedium durchströmt werden können. Hierdurch können Energiespeicherzellen mit einem verhältnismäßig großen Durchmesser von 30 mm oder größer, sehr effektiv temperiert und insbesondere gekühlt werden, so dass hiermit eine Realisierung von Batteriemodulen und von Batterien mit insgesamt größeren und damit leistungsfähigeren Energiespeicherzellen möglich ist.

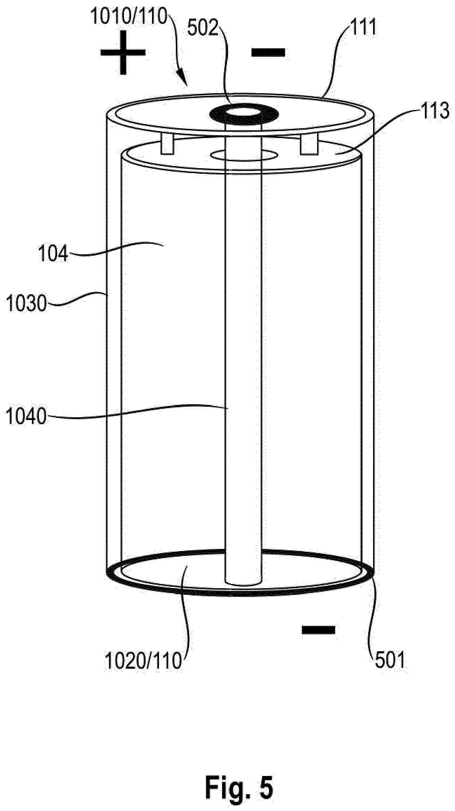

**Fig. 5** zeigt eine schematische Ansicht einer weiteren Ausführungsform der erfindungsgemäßen Energiespeicherzelle 100, die in Form einer zylindrischen Rundzelle realisiert ist. Im Inneren der Energiespeicherzelle 100 ist der als hohlzylindrische Wickel ausgebildete Elektroden-Separator-Verbund 104 angeordnet. Analog zu den anderen erläuterten Ausführungsformen, insbesondere zu der in Fig. 3 dargestellten Ausführungsform, umfasst der Elektroden-Separator-Verbund 104 mindestens eine bandförmige Anode, mindestens einen bandförmigen Separator und mindestens eine bandförmige Kathode, wobei die Elektroden und ihre Bestandteile zur besseren Übersicht hier nicht dargestellt sind. Die bandförmige Anode wird von einem bandförmigen Anodenstromkollektor gebildet, der mit negativem Aktivmaterial beschichtet ist, wobei ein Randstreifen entlang eines Längsrands des Anodenstromkollektors frei von Aktivmaterial ist. Die bandförmige Kathode wird von einem bandförmigen Kathodenstromkollektor gebildet, der mit positivem Aktivmaterial beschichtet ist, wobei ein Randstreifen entlang eines Längsrands des Kathodenstromkollektors frei von Aktivmaterial ist. Der Randstreifen des Anodenstromkollektors, der frei von Aktivmaterial ist, und der Randstreifen des Kathodenstromkollektors, der frei von Aktivmaterial ist, ragen aus jeweils einer Stirnseite des zylindrischen Wickels 104 heraus.

Der äußere, zylindrische Gehäusemantel der Zelle 100 wird von einem ersten rohrförmigen Gehäuseteil 1030 gebildet. Die obere Stirnseite der Energiespeicherzelle 100 wird von einem ersten ringförmigen Verschlusselement 1010 gebildet, wobei das ringförmige Verschlusselement gleichbedeutend mit dem Kontaktelement 110 ist. In entsprechender Weise ist die untere Stirnseite mit einem weiteren ringförmigen Verschlusselement 1020 / Kontaktelement 110 gebildet. Das Verschlusselement 1010/110 ist aus zwei Teilen aufgebaut und umfasst eine Lochscheibe 111, die die Stirnseite nach außen begrenzt, und ein unterhalb der Lochscheibe 111 angeordnetes Kontaktblech 113 mit einer zentralen Aussparung.

Die Kontaktierung des unbeschichteten Längsrands des Kathodenstromkollektors, der aus dem wickelförmigen Elektroden-Separator-Verbund 104 an dieser Seite herausragt, erfolgt an der unteren Seite des Kontaktblechs 113. Bevorzugt ist der Längsrand dort über Verschweißung oder Verlötung angebunden. Das Kontaktblech 113 wiederum ist über zwei elektrische Leiter elektrisch mit der Lochscheibe 111 verbunden. Die Lochscheibe 111 ist durch das elektrisch isolierende Dichtmittel 502 von dem zweiten (inneren) rohrförmigen Gehäuseteil 1040, das von einem metallischen Röhrchen gebildet wird, elektrisch isoliert. Ihr äußerer Rand ist hingegen mit dem umlaufenden Öffnungsrand des Gehäuseteils 1030 verschweißt oder verlötet.

Der Elektroden-Separator-Verbund 104 ist unmittelbar auf dem Röhrchen 1040 aufgewickelt. In diesem Beispiel ist der Stromkollektor der Anode bevorzugt elektrisch und unmittelbar an das zweite rohrförmige Gehäuseteil 1040 angebunden. Darüber hinaus ist der unbeschichtete Längsrand des Anodenstromkollektors, der aus dem wickelförmigen Elektroden-Separator-Verbund 104 an der unteren Seite herausragt, unmittelbar an das die untere Stirnseite der Zelle 100 bildende ringförmige Verschlusselement 1020/110 angebunden. Bevorzugt besteht auch hier eine Schweiß- oder Lötverbindung.

Das untere ringförmige Verschlusselement 1020/110 ist gegenüber dem ersten (äußeren) rohrförmigen Gehäuseteil 1040 durch eine elektrisch isolierende Dichtung 501 elektrisch isoliert, sodass die untere Stirnseite der Zelle 100 einen Teil des negativen Pols der Zelle 100 bildet. Den anderen Teil des negativen Pols bildet das Röhrchen 1040, das bis zur oberen Stirnseite der Zelle reicht. Eine Ausgestaltung mit umgekehrter Polarisierung ist selbstverständlich auch möglich.

In einer Variation der dargestellten Zelle kann auch auf das Kontaktblech 113 und entsprechend die Leiter zwischen dem Kontaktblech 113 und der Lochscheibe 111 verzichtet werden. Der unbeschichtete Längsrand der Kathode, der oben aus dem wickelförmigen Elektroden-Separator-Verbund 104 herausragt, ist dann unmittelbar an die untere Seite der Lochscheibe 111 angebunden, bevorzugt durch Verschweißung oder Verlötung.

Zur Erleichterung der Kontaktierung des negativen Pols auf der oberen Stirnseite der Zelle 100 kann es vorgesehen sein, dass das metallische Röhrchen, dass das zweite (innere) rohrförmige Gehäuseteil 1040 bildet, aus der oberen Stirnseite der Zelle 100 etwas herausragt, beispielweise um 2 - 3 mm.

Diese Ausführungsform der Energiespeicherzelle 100 hat den besonderen Vorteil, dass sich auf einer Seite der Zelle, in diesem Beispiel auf der oberen Stirnseite, sowohl das negative als auch das positive Potential der Zelle abgreifen lassen. Gleichfalls ist es möglich, dass die Zelle 100 in herkömmlicher Weise über die entgegengesetzt liegenden Stirnseiten elektrisch kontaktiert wird. Gleichzeitig kann ein Kühlkonzept gemäß der obigen Beschreibung über das von dem zweiten (inneren) rohrförmigen Gehäuseteil gebildeten zentralen Kanal realisiert werden.

## Patentansprüche

1. Als zylindrische Rundzelle mit einem Außendurchmesser von mindestens 30 mm ausgebildete Energiespeicherzelle (100) mit den Merkmalen
a. die Energiespeicherzelle umfasst einen Elektroden-Separator-Verbund (104) mit der Sequenz Anode / Separator / Kathode,
b. der Elektroden-Separator-Verbund (104) liegt in Form eines hohlzylindrischen Wickels mit zwei endständigen Stirnseiten und einem dazwischen liegenden Wickelmantel vor,
c. die Energiespeicherzelle umfasst ein Gehäuse,
d. das Gehäuse umschließt einen hohlzylindrischen Innenraum,
e. in dem Innenraum des Gehäuses ist der als Wickel ausgebildete Elektroden-Separator-Verbund (104) axial ausgerichtet,
f. zur Begrenzung des Innenraums umfasst das Gehäuse
- ein erstes ringförmiges Verschlusselement (1010) mit einem Außen- und einem Innendurchmesser,
- ein zweites ringförmiges Verschlusselement (1020) mit einem Außen- und einem Innendurchmesser,
- ein erstes rohrförmiges Gehäuseteil (1030) mit zwei endständigen kreisförmigen Öffnungen, wobei der Durchmesser des ersten rohrförmigen Gehäuseteils (1030) auf die Außendurchmesser des ersten ringförmigen Verschlusselements (1010) und des zweiten ringförmigen Verschlusselements (1020) abgestimmt ist,
- ein zweites rohrförmiges Gehäuseteil (1040) mit zwei endständigen kreisförmigen Öffnungen, wobei der Durchmesser des zweiten rohrförmigen Gehäuseteils (1040) auf die Innendurchmesser des ersten ringförmigen Verschlusselements (1010) und des zweiten ringförmigen Verschlusselements (1020) abgestimmt ist,
g. die Anode des Elektroden-Separator-Verbundes ist bandförmig ausgebildet und umfasst einen bandförmigen Anodenstromkollektor (115) mit einem ersten Längsrand (115a) und einem zweiten Längsrand,
h. der Anodenstromkollektor (115) umfasst einen streifenförmigen Hauptbereich, der mit einer Schicht aus negativem Elektrodenmaterial (155) beladen ist, sowie einen freien Randstreifen (117), der sich entlang des ersten Längsrands (115a) erstreckt und der nicht mit dem Elektrodenmaterial (155) beladen ist,
i. die Kathode des Elektroden-Separator-Verbundes ist bandförmig ausgebildet und umfasst einen bandförmigen Kathodenstromkollektor (125) mit einem ersten Längsrand (125a) und einem zweiten Längsrand,
j. der Kathodenstromkollektor (125) umfasst einen streifenförmigen Hauptbereich, der mit einer Schicht aus positivem Elektrodenmaterial (123) beladen ist, sowie einen freien Randstreifen (121), der sich entlang des ersten Längsrands (125a) erstreckt und der nicht mit dem Elektrodenmaterial (123) beladen ist,
k. die Anode und die Kathode sind derart ausgebildet und/oder innerhalb des Elektroden-Separator-Verbunds (104) derart zueinander angeordnet, dass der erste Längsrand (115a) des Anodenstromkollektors (115) aus einer der endständigen Stirnseiten und der erste Längsrand (125a) des Kathodenstromkollektors (125) aus der anderen der endständigen Stirnseiten austritt, und
l. die Energiespeicherzelle umfasst ein zumindestteilweise metallisch ausgebildetes Kontaktelement, das in unmittelbarem Kontakt mit einem der ersten Längsränder (115a, 125a) steht und das mit diesem Längsrand durch Verschweißung verbunden ist, sowie den zusätzlichen Merkmalen
m. das erste oder das zweite ringförmige Verschlusselement (1010, 1020) fungiert als das Kontaktelement, und
n. das zweite rohrförmige Gehäuseteil (1040) definiert einen beidseitig offenen Kanal (1500), der axial durch die Energiespeicherzelle verläuft.

2. Energiespeicherzelle nach Anspruch 1 mit dem folgenden zusätzlichen Merkmal:
a. Der beidseitig offene Kanal (1500) ist zur Temperierung der Energiespeicherzelle eingerichtet.

3. Energiespeicherzelle nach Anspruch 1 oder Anspruch 2 mit dem folgenden zusätzlichen Merkmal:
a. Der beidseitig offene Kanal Hoh(1500) ist für den Durchfluss eines Temperiermediums, insbesondere eines Gases oder einer Flüssigkeit, vorgesehen.

4. Energiespeicherzelle nach einem der vorhergehenden Ansprüche mit dem folgenden zusätzlichen Merkmal:
a. In den beidseitig offenen Kanal (1500) ist ein metallisches Stäbchen oder Röhrchen als Temperiervermittler eingebracht.

5. Energiespeicherzelle nach einem der vorhergehenden Ansprüche mit dem folgenden zusätzlichen Merkmal:
a. die zylindrische Energiespeicherzelle (100) hat einen Außendurchmesser von mindestens 32 mm.

6. Energiespeicherzelle nach einem der vorhergehenden Ansprüche mit dem folgenden zusätzlichen Merkmal:
a. die Energiespeicherzelle (100) ist eine Lithium-Ionen-Zelle.

7. Batterie mit mindestens zwei Energiespeicherzellen (100) gemäß einem der Ansprüche 1 bis 6 und einer Einrichtung zur Temperierung der Energiespeicherzellen über die beidseitig offenen Kanäle (1500) der Energiespeicherzellen.

8. Batterie nach Anspruch 7 mit dem folgenden zusätzlichen Merkmal:
a. Die Energiespeicherzellen (100) der Batterie sind innerhalb von Batteriemodulen (500) angeordnet, die zu einer Batterie zusammengeschaltet sind.

9. Batterie nach Anspruch 7 oder Anspruch 8 mit dem folgenden zusätzlichen Merkmal:
a. Die Einrichtung zur Temperierung der Energiespeicherzellen umfasst Mittel zur Einleitung eines Temperiermediums in die beidseitig offenen Kanäle (1500) der Energiespeicherzellen.

10. Batterie nach einem der Ansprüche 7 bis 9 mit mindestens einem der folgenden zusätzlichen Merkmale:
a. Die Einrichtung zur Temperierung der Energiespeicherzellen umfasst Mittel zum Antrieb eines gasförmigen Temperiermediums, insbesondere eines Luftstroms.
b. Die Einrichtung zur Temperierung der Energiespeicherzelle umfasst Mittel zur Lenkung eines gasförmigen Temperiermediums, insbesondere eines Luftstroms, durch die beidseitig offenen Kanäle (1500) der Energiespeicherzellen hindurch.

11. Batterie nach einem der Ansprüche 7 bis 9 mit mindestens einem der folgenden zusätzlichen Merkmale:
a. Die Einrichtung zur Temperierung der Energiespeicherzellen umfasst Pumpmittel zur Bewegung eines flüssigen Temperiermediums.
b. Die Einrichtung zur Temperierung der Energiespeicherzelle umfasst Mittel zur Lenkung eines flüssigen Temperiermediums durch die beidseitig offenen Kanäle (1500) der Energiespeicherzellen hindurch.

12. Batterie nach einem der Ansprüche 7 bis 11 mit den folgenden zusätzlichen Merkmalen:
a. in den die beidseitig offenen Kanälen (1500) der Energiespeicherzellen sind metallisches Stäbchen oder Röhrchen als Temperiervermittler eingebracht.
b. Die metallischen Stäbchen oder Röhrchen sind an Kühl- und/oder Heizmittel angekoppelt.

13. Verfahren zur Herstellung einer Energiespeicherzelle gemäß einem der Ansprüche 1 bis 6 umfassend die folgenden Schritte:
a. Bereitstellung eines Elektroden-Separator-Verbunds (104) mit mindestens der Sequenz Anode / Separator / Kathode, der in Form eines hohlzylindrischen Wickels mit zwei endständigen Stirnseiten und einem dazwischen liegenden Wickelmantel vorliegt, wobei die Elektroden jeweils einen mit einem Elektrodenmaterial beschichteten Stromkollektor (115, 125) mit einem ersten Längsrand (115a, 125a) und einem zweiten Längsrand aufweisen und einer der Längsränder (115a, 125a) aus einer der endständigen Stirnseiten und der andere der Längsränder aus der anderen der endständigen Stirnseiten austritt,
b. Bereitstellung der Komponenten eines Gehäuses, nämlich
- eines ersten ringförmigen Verschlusselements (1010) mit einem Außen- und einem Innendurchmesser,
- eines zweiten ringförmigen Verschlusselements (1020) mit einem Außen- und einem Innendurchmesser,
- eines ersten rohrförmigen Gehäuseteils (1030) mit zwei endständigen kreisförmigen Öffnungen, wobei der Durchmesser des ersten rohrförmigen Gehäuseteils (1030) auf den Außendurchmesser des ersten ringförmigen Verschlusselements (1010) und des zweiten ringförmigen Verschlusselements (1020) abgestimmt ist,
- eines zweiten rohrförmigen Gehäuseteils (1040) mit zwei endständigen kreisförmigen Öffnungen, wobei der Durchmesser des zweiten rohrförmigen Gehäuseteils (1040) auf den Innendurchmesser des ersten ringförmigen Verschlusselements (1010) und des zweiten ringförmigen Verschlusselements (1020) abgestimmt ist,
c. Montage des Gehäuses unter Anordnung des Elektroden-Separator-Verbundes (104) in dem Gehäuse,
d. Elektrisches Kontaktieren des Elektroden-Separator-Verbundes mit den ringförmigen Verschlusselementen des Gehäuses durch Verschweißen und
e. Verschließen und/oder Abdichten des Gehäuses.

14. Verfahren nach Anspruch 13 umfassend den folgenden Schritt:
a. Der Elektroden-Separator-Verbund in Form des hohlzylindrischen Wickels wird hergestellt, indem die Elektroden und der Separator auf dem zweiten rohrförmigen Gehäuseteil (1040) aufgewickelt werden,

## Claims

1. Energy storage cell (100) designed as a cylindrical round cell with an outer diameter of at least 30 mm, having the features
a. The energy storage cell comprises an electrode-separator assembly (104) with the sequence anode / separator / cathode,
b. the electrode-separator assembly (104) is in the form of a hollow cylindrical winding with two terminal end faces and a winding shell between them,
c. The energy storage cell comprises a housing,
d. the housing encloses a hollow cylindrical interior space,
e. in the interior space of the housing, the electrode-separator assembly (104) formed as a winding is axially aligned,
f. to delimit the interior space, the housing comprises
- a first annular closure member (1010) having an outer diameter and an inner diameter,
- a second annular closure member (1020) having an outer diameter and an inner diameter,
- a first tubular housing part (1030) having two terminal circular openings, the diameter of the first tubular housing part (1030) being matched to the outer diameters of the first annular closure member (1010) and the second annular closure member (1020),
- a second tubular housing part (1040) having two terminal circular openings, the diameter of the second tubular housing part (1040) being matched to the inner diameters of the first annular closure member (1010) and the second annular closure member (1020),
g. the anode of the electrode-separator assembly is ribbon-shaped and comprises a ribbon-shaped anode current collector (115) having a first longitudinal edge (115a) and a second longitudinal edge,
h. the anode current collector (115) comprises a strip-shaped main region loaded with a layer of negative electrode material (155) and a free edge strip (117) extending along the first longitudinal edge (115a) which is not loaded with the electrode material (155),
i. the cathode of the electrode-separator assembly is ribbon-shaped and comprises a ribbon-shaped cathode current collector (125) having a first longitudinal edge (125a) and a second longitudinal edge,
j. the cathode current collector (125) comprises a strip-shaped main region loaded with a layer of positive electrode material (123) and a free edge strip (121) extending along the first longitudinal edge (125a) which is not loaded with the electrode material (123),
k. the anode and the cathode are formed and/or arranged within the electrode-separator assembly (104) relative to each other such that the first longitudinal edge (115a) of the anode current collector (115) protrudes from one of the terminal faces and the first longitudinal edge (125a) of the cathode current collector (125) protrudes from the other of the terminal faces; and
l. the energy storage cell comprises an at least partially metallic contact element which is in direct contact with one of the first longitudinal edges (115a, 125a) and which is connected to this longitudinal edge by welding,
as well as the additional features
m. the first or the second annular closure member (1010, 1020) functions as the contact member, and
n. the second tubular housing part (1040) defines a channel (1500) open at both ends and extending axially through the energy storage cell.

2. The energy storage cell of claim 1, having the following additional feature:
a. The channel (1500) open on both sides is set up for temperature control of the energy storage cell.

3. The energy storage cell of claim 1 or claim 2, having the following additional feature:
a. The channel (1500), which is open on both sides, is provided for the flow of a temperature control medium, in particular a gas or a liquid.

4. An energy storage cell according to any one of the preceding claims, having the following additional feature:
a. A metallic rod or tube is inserted into the channel (1500), which is open on both sides, as a tempering agent.

5. An energy storage cell according to any one of the preceding claims, having the following additional feature:
a. the cylindrical energy storage cell (100) has an outer diameter of at least 32 mm.

6. An energy storage cell according to any one of the preceding claims, having the following additional feature:
a. the energy storage cell (100) is a lithium-ion cell.

7. A battery comprising at least two energy storage cells (100) according to any one of claims 1 to 6, and a device for tempering the energy storage cells via the channels (1500) of the energy storage cells that are open on both sides.

8. The battery of claim 7, having the following additional feature:
a. The battery energy storage cells (100) are arranged within battery modules (500) that are interconnected to form a battery.

9. The battery of claim 7 or claim 8 having the following additional feature:
a. The device for temperature control of the energy storage cells comprises means for introducing a temperature control medium into the channels (1500) of the energy storage cells, which are open on both sides.

10. The battery of any one of claims 7 to 9, having at least one of the following additional features:
a. The device for temperature control of the energy storage cells comprises means for driving a gaseous temperature control medium, in particular an air flow.
b. The device for tempering the energy storage cell comprises means for directing a gaseous tempering medium, in particular an air flow, through the channels (1500) of the energy storage cells, which are open on both sides.

11. The battery of any one of claims 7 to 9, having at least one of the following additional features:
a. The device for tempering the energy storage cells comprises pumping means for moving a liquid temperature control medium.
b. The device for tempering the energy storage cells comprises means for directing a liquid temperature control medium through the channels (1500) of the energy storage cells, which are open on both sides.

12. A battery according to any one of claims 7 to 11, having the following additional features:
a. Metal rods or tubes are inserted into the channels (1500) of the energy storage cells, which are open on both sides, as a temperature control agent.
b. The metallic rods or tubes are coupled to cooling and/or heating means.

13. A method of manufacturing an energy storage cell according to any one of claims 1 to 6 comprising the following steps:
a. Providing an electrode-separator assembly (104) having at least the anode/separator/cathode sequence, said assembly being in the form of a hollow cylindrical winding having two terminal end faces and a winding shell therebetween, said electrodes each comprising a current collector (115, 125) having a first longitudinal edge (115a, 125a) and a second longitudinal edge, one of said longitudinal edges (115a, 125a) protruding from one of said terminal end faces and the other of said longitudinal edges protruding from the other of said terminal end faces,
b. Providing the components of a housing, namely.
- of a first annular closure member (1010) having an outer diameter and an inner diameter,
- of a second annular closure member (1020) having an outer diameter and an inner diameter,
- of a first tubular housing part (1030) having two terminal circular openings, the diameter of the first tubular housing part (1030) being matched to the outer diameter of the first annular closure member (1010) and the second annular closure member (1020),
- of a second tubular housing part (1040) having two terminal circular openings, the diameter of the second tubular housing part (1040) being matched to the inner diameter of the first annular closure member (1010) and the second annular closure member (1020),
c. Assembly of the housing under arrangement of the electrode-separator assembly (104) in the housing,
d. Electrical contacting of the electrode-separator assembly with the annular closing elements of the housing by welding and
e. Closing and/or sealing the housing.

14. Method according to claim 13 comprising the following steps:
a. The electrode-separator assembly being in the form of a hollow cylindrical winding is manufactured by winding the electrodes and the separator onto the second tubular housing part (1040).

## Revendications

1. Cellule d'accumulation d'énergie (100) formée comme une cellule cylindrique ronde avec un diamètre extérieur d'au moins 30 mm, avec les caractéristiques
a. la cellule d'accumulation d'énergie comprend un ensemble électrodes-séparateur (104) avec la séquence anode / séparateur / cathode,
b. l'ensemble électrodes-séparateur (104) est présent sous la forme d'un enroulement cylindrique creux avec deux faces frontales d'extrémité et une enveloppe d'enroulement intermédiaire,
c. la cellule d'accumulation d'énergie comprend un boîtier,
d. le boîtier renferme un espace intérieur cylindrique creux,
e. l'ensemble électrodes-séparateur (104) formé comme un enroulement est orienté axialement dans l'espace intérieur du boîtier,
f. le boîtier comprend pour délimiter l'espace intérieur
- un premier élément de fermeture annulaire (1010) avec un diamètre extérieur et un diamètre intérieur,
- un deuxième élément de fermeture annulaire (1020) avec un diamètre extérieur et un diamètre intérieur,
- une première partie de boîtier tubulaire (1030) avec deux ouvertures circulaires d'extrémité, le diamètre de la première partie de boîtier tubulaire (1030) étant adapté aux diamètres extérieurs du premier élément de fermeture annulaire (1010) et du deuxième élément de fermeture annulaire (1020),
- une deuxième partie de boîtier tubulaire (1040) avec deux ouvertures circulaires d'extrémité, le diamètre de la deuxième partie de boîtier tubulaire (1040) étant adapté aux diamètres intérieurs du premier élément de fermeture annulaire (1010) et du deuxième élément de fermeture annulaire (1020),
g. l'anode de l'ensemble électrodes-séparateur est formée en bande et comprend un collecteur de courant d'anode en forme de bande (115) avec un premier bord longitudinal (115a) et un second bord longitudinal,
h. le collecteur de courant d'anode (115) comprend une zone principale en forme de bande qui est chargée avec une couche composée d'un matériau d'électrode négative (155), ainsi qu'une bande de bord libre (117), qui s'étend le long du premier bord longitudinal (115a) et qui n'est pas chargée avec le matériau d'électrode (155),
i. la cathode de l'ensemble électrodes-séparateur est formée en bande et comprend un collecteur de courant de cathode en forme de bande (125) avec un premier bord longitudinal (125a) et un second bord longitudinal,
j. le collecteur de courant de cathode (125) comprend une zone principale en forme de bande, qui est chargée avec une couche composée d'un matériau d'électrode positive (123), ainsi qu'une bande de bord libre (121), qui s'étend le long du premier bord longitudinal (125a) et qui n'est pas chargée avec le matériau d'électrode (123),
k. l'anode et la cathode sont réalisées de telle manière et/ou sont disposées à l'intérieur de l'ensemble électrodes-séparateur (104) l'une par rapport à l'autre de telle manière que le premier bord longitudinal (115a) du collecteur de courant d'anode (115) sort d'une des faces frontales d'extrémité et le premier bord longitudinal (125a) du collecteur de courant de cathode (125) sort de l'autre des faces frontales d'extrémité,
l. la cellule d'accumulation d'énergie comprend un élément de contact formé au moins en partie de manière métallique, qui est en contact direct avec l'un des premiers bords longitudinaux (115a, 125a) et qui est relié audit bord longitudinal par soudage,
ainsi qu'avec les caractéristiques supplémentaires
m. le premier ou le deuxième élément de fermeture annulaire (1010, 1020) fait office d'élément de contact, et
n. la deuxième partie de boîtier tubulaire (1040) définit un canal ouvert des deux côtés (1500), qui s'étend axialement à travers la cellule d'accumulation d'énergie.

2. Cellule d'accumulation d'énergie selon la revendication 1 avec la caractéristique supplémentaire suivante :
a. Le canal ouvert des deux côtés (1500) est mis au point pour thermoréguler la cellule d'accumulation d'énergie.

3. Cellule d'accumulation d'énergie selon la revendication 1 ou la revendication 2 avec la caractéristique supplémentaire suivante :
a. Le canal ouvert des deux côtés (1500) est prévu pour le passage d'un milieu de thermorégulation, en particulier d'un gaz ou d'un liquide.

4. Cellule d'accumulation d'énergie selon l'une des revendications précédentes avec la caractéristique supplémentaire suivante :
a. Dans le canal ouvert des deux côtés (1500), un bâtonnet métallique ou un petit tube est introduit comme agent de thermorégulation.

5. Cellule d'accumulation d'énergie selon l'une des revendications précédentes avec la caractéristique supplémentaire suivante :
a. La cellule d'accumulation d'énergie cylindrique (100) a un diamètre extérieur d'au moins 32 mm.

6. Cellule d'accumulation d'énergie selon l'une des revendications précédentes avec la caractéristique supplémentaire suivante :
a. La cellule d'accumulation d'énergie (100) est une cellule au lithium-ion.

7. Batterie avec au moins deux cellules d'accumulation d'énergie (100) selon l'une des revendications 1 à 6 et un dispositif de thermorégulation des cellules d'accumulation d'énergie par les canaux ouverts des deux côtés (1500) des cellules d'accumulation d'énergie.

8. Batterie selon la revendication 7 avec la caractéristique supplémentaire suivante :
a. Les cellules d'accumulation d'énergie (100) de la batterie sont disposées à l'intérieur de modules de batterie (500), qui sont interconnectés en une batterie.

9. Batterie selon la revendication 7 ou la revendication 8 avec la caractéristique supplémentaire suivante :
a. Le dispositif de thermorégulation des cellules d'accumulation d'énergie comprend des moyens d'introduction d'un milieu de thermorégulation dans les canaux ouverts des deux côtés (1500) des cellules d'accumulation d'énergie.

10. Batterie selon l'une des revendications 7 à 9 avec au moins une des caractéristiques supplémentaires suivantes :
a. Le dispositif de thermorégulation des cellules d'accumulation d'énergie comprend des moyens d'entraînement d'un milieu de thermorégulation gazeux, en particulier d'un flux d'air.
b. Le dispositif de thermorégulation de la cellule d'accumulation d'énergie comprend des moyens de direction d'un milieu de thermorégulation gazeux, en particulier d'un flux d'air, à travers les canaux ouverts des deux côtés (1500) des cellules d'accumulation d'énergie.

11. Batterie selon l'une des revendications 7 à 9 avec au moins une des caractéristiques supplémentaires suivantes :
a. Le dispositif de thermorégulation des cellules d'accumulation d'énergie comprend des moyens de pompage pour le déplacement d'un milieu de thermorégulation liquide.
b. Le dispositif de thermorégulation de la cellule d'accumulation d'énergie comprend des moyens de direction d'un milieu de thermorégulation liquide à travers les canaux ouverts des deux côtés (1500) des cellules d'accumulation d'énergie.

12. Batterie selon l'une des revendications 7 à 11, avec les caractéristiques supplémentaires suivantes :
a. Dans les canaux ouverts des deux côtés (1500) des cellules d'accumulation d'énergie, des bâtonnets métalliques ou des petits tubes sont introduits comme agent de thermorégulation.
b. Les bâtonnets ou petits tubes métalliques sont couplés à des agents de refroidissement et/ou de chauffage.

13. Procédé de fabrication d'une cellule d'accumulation d'énergie selon l'une des revendications 1 à 6, comprenant les étapes suivantes :
a. fourniture d'un ensemble électrodes-séparateur (104) avec au moins la séquence anode / séparateur / cathode, qui est présent sous la forme d'un enroulement cylindrique creux avec deux faces frontales d'extrémité et une enveloppe d'enroulement intermédiaire, les électrodes comportant chacune un collecteur de courant (115, 125) revêtu d'un matériau d'électrode avec un premier bord longitudinal (115a, 125a) et un second bord longitudinal et l'un des bords longitudinaux (115a, 125a) sort de l'une des faces frontales d'extrémité et l'autre des bords longitudinaux sort de l'autre des faces frontales d'extrémité,
b. fourniture des composants d'un boîtier, à savoir
- d'un premier élément de fermeture annulaire (1010) avec un diamètre extérieur et un diamètre intérieur,
- d'un deuxième élément de fermeture annulaire (1020) avec un diamètre extérieur et un diamètre intérieur,
- d'une première partie de boîtier tubulaire (1030) avec deux ouvertures circulaires d'extrémité, le diamètre de la première partie de boîtier tubulaire (1030) étant adapté au diamètre extérieur du premier élément de fermeture annulaire (1010) et du deuxième élément de fermeture annulaire (1020),
- d'une deuxième partie de boîtier tubulaire (1040) avec deux ouvertures circulaires d'extrémité, le diamètre de la deuxième partie de boîtier tubulaire (1040) étant adapté au diamètre intérieur du premier élément de fermeture annulaire (1010) et du deuxième élément de fermeture annulaire (1020),
c. montage du boîtier en disposant l'ensemble électrodes-séparateur (104) dans le boîtier,
d. mise en contact électrique de l'ensemble électrodes-séparateur avec les éléments de fermeture annulaires du boîtier par soudage et
e. fermeture et/ou étanchéification du boîtier.

14. Procédé selon la revendication 13, comprenant l'étape suivante :
a. L'ensemble électrodes-séparateur sous la forme de l'enroulement cylindrique creux est fabriqué en enroulant les électrodes et le séparateur sur la deuxième partie de boîtier tubulaire (1040).
